# EUROPEAN PATENT APPLICATION

(11) **EP 2 196 506 A1**
(43) Date of publication of application: **16.06.2010**
(21) Application number: 09015214.1
(22) Date of filing: 08.12.2009
(51) Int. Cl.: C09D 11/00

(54) **Ink set for inkjet recording**

(30) Priority: 10.12.2008 JP 2008314724
(71) Applicant: FUJIFILM Corporation, Minato-ku Tokyo (JP)
(72) Inventor: Sakai, Minoru, Ashigarakami-gun Kanagawa (JP); Irita, Kiyoshi, Ashigarakami-gun Kanagawa (JP)
(74) Representative: HOFFMANN EITLE

(57) **Abstract**

An ink set for inkjet recording includes an ink composition containing a pigment; and a reaction liquid containing: a solvent and an organic acid which has a first acid dissociation constant (at 25°C) of 1.5 to 4.5. A 10% by mass aqueous solution of the solvent has a surface tension (at 25°C) of not less than 40 mN/m.

## Description

### BACKGROUND OF THE INVENTION

### Field of Invention

The present invention relates to an ink set for inkjet recording.

### Description of the Related Art

An inkjet recording method is a method in which recording is performed by jetting ink droplets from each of a number of nozzles formed on an inkjet head. The method is widely used because the noise during a recording operation is low, running costs are low, and a high quality image can be recorded on a wide variety of recording media.

As an inkjet recording method, a two-liquid reaction method is known. The two-liquid reaction method involves reacting an ink, and a treatment liquid which coagulates inks, with each other so as to coagulate the ink and thus accelerate ink fixation.
For example, an inkjet recording method is known with which fixability and color development are improved while suppressing bleed-through of color ink and bleeding. In the method, a recording unit for jetting a pigment ink and a reaction liquid that contains a polyvalent metal salt and that has a higher surface tension than that of the pigment ink is moved in a scanning manner relative to a recording medium, during which each liquid is jetted from the recording unit to perform recording (see, for example, Japanese Patent Application Laid-Open (JP-A) No. 2004-249725).

Also, an inkjet recording method which provides high image density and excellent rub-fastness without bleedings has been disclosed (see, for example, JP-A No. 2005-74654). In this method, the surface tension of a reaction liquid containing a zirconium salt and an ammonium salt is set to be higher than the average value of the surface tensions of aqueous pigment inks used in combination with the reaction liquid, the surface tension of the reaction liquid is from 25 to 50 mN/m, the surface tensions of the inks are from 20 to 50 mN/m, and the difference between the surface tension of the reaction liquid and the average of the surface tensions of the inks is in a range of from 5 to 25 mN/m.

Further, an image forming method has been disclosed which forms a favorable image by stabilizing the shape of ink dots (see, for example, JP-A No. 2007-331171). In the method, a reaction liquid containing a component that reacts with the ink is applied to an ink receptor and, thereafter, plural inks are applied in descending order of the surface tensions of the inks, thereby forming an image.

The present invention has been made in view of the above circumstances and provides an ink set for inkjet recording.
According to an aspect of the present invention, an ink set for inkjet recording includes: an ink composition containing a pigment; and a reaction liquid containing a solvent and an organic acid having a first acid dissociation constant (at 25°C) of 1.5 to 4.5, wherein a 10% by mass aqueous solution of the solvent has a surface tension (at 25°C) of not less than 40 mN/m.

### BRIEF DESCRIPTION OF THE DRAWINGS

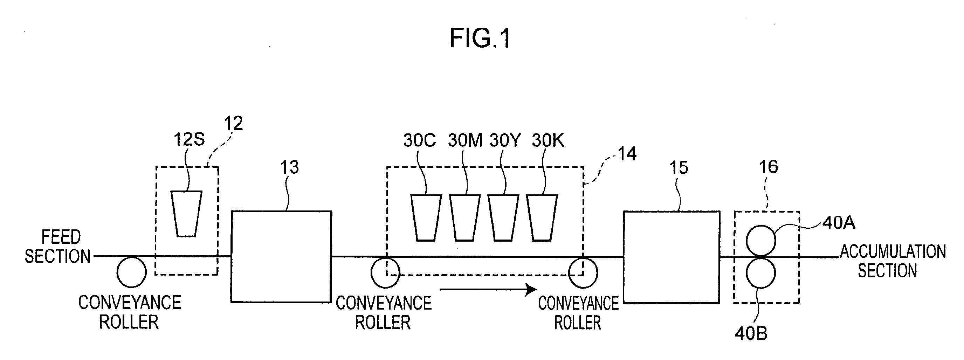

Fig. 1 is a rough schematic diagram illustrating an example of configuration of an inkjet recording device used for the image recording method according to the present invention.

### DETAILED DESCRIPTION OF THE INVENTION

In the inkjet recording methods using the pigment inks and the reaction liquids described in JP-A Nos. 2004-249725, 2005-74654 and 2007-331171, the coagulation and fixation properties of the ink applied imagewise to a recording medium are not sufficient and, in particular, further improvement of aggregation property has been desired for high-resolution image printing. Although the present inventors discovered that coagulation properties capable of forming a high-resolution image can be attained by employing a specific organic acid, there are cases in which defects such as expansion of the surface of the recording medium occur depending on the first acid dissociation constant of the acid used in the reaction liquid (treatment liquid) containing a coagulant and/or the characteristics of a solvent used in the reaction liquid, as a result of which the fixation of the ink is deteriorated. Therefore, improvement thereof has been demanded.
The present invention has been made in view of the above circumstances. In the following, an ink set for inkjet recording is described.

The ink set for inkjet recording of the present invention (hereinafter, also referred to simply as the ink set (of the present invention)) includes: an ink composition containing a pigment; and a reaction liquid containing a solvent and an organic acid which has a first acid dissociation constant (at 25°C) of 1.5 to 4.5, wherein
a 10% by mass aqueous solution of the solvent of the reaction liquid has a surface tension (at 25°C) of not less than 40 mN/m.
In the present invention, a first acid dissociation constant (at 25°C) (hereinafter, also referred to as "pKa1") means the dissociation constant of an acid at 25°C. In a multistage dissociation, the first acid dissociation constant means the dissociation constant of the first dissociation step of the multistage dissociation.
The above configuration of the ink set for inkjet recording of the present invention, particularly inclusion of an organic acid having a specific first acid dissociation constant pKa1 value and use of a reaction liquid containing a solvent having a specific surface tension, reduces deterioration, such as a deformation of the recording medium surface, caused by the reaction liquid, ensures superior image-bearing film physical property, and provides an image with excellent quality that is not easily detached.

### Reaction Liquid

The ink set for inkjet recording of the present invention includes an ink composition and a reaction liquid.

### (Organic Acid)

The reaction liquid of the present invention contains at least one organic acid having a pKa1 (at 25°C) of from 1.5 to 4.5 (hereinafter, also referred to as "specific organic acid") as a reaction agent.
The reaction liquid containing the specific organic acid (hereinafter, also referred to as a "treatment liquid") is capable of forming coagulation when contacted with an ink composition.
Further, inclusion of the specific organic acid in the reaction liquid reduces defects such as expansion of the surface of the recording medium when the reaction liquid is applied to the recording medium, and thus provides excellent image-bearing film characteristics. In addition, the reaction liquid containing the specific organic acid allows the ink composition to form coagulation at high speed when the reaction liquid contacts with the ink composition.

Although the pKa1 (at 25°C) of the specific organic acid is from 1.5 to 4.5, from the viewpoint of improving coagulation speed, the pKa1 is preferably from 1.8 to 4.0, more preferably from 2.0 to 3.8, and especially preferably from 2.5 to 3.5.
As a method of experimentally determining the pKa1, an ordinary titration method may be employed. pKa1 values may be found in known documents such as the Chemical Handbook (The Chemical Society of Japan, ed., published by Maruzen Co., Ltd.). Further, pKa1 values may be calculated based on the structure of the compound using calculation software such as ACD/ pKa DB.
The pKa1 values in the present invention are values measured by the titration method.

Examples of the specific organic acid include maleic acid (1.84), malonic acid (2.6), DL-malic acid (3.23), and tartaric acid (2.87), wherein the values in the parentheses represent pKa1 values.
The specific organic acid may be used singly, or in combination of two or more thereof.

The reaction liquid of the present invention may contain one or more other acidic compounds than the specific organic acid as long as the effects of the present invention are not impaired.
Examples of the acidic compounds include a compound having a phosphoric acid group, a phosphonic acid group, a phosphinic acid group, a sulfuric acid group, a sulfonic acid group, a sulfinic acid group, or a carboxyl group; and salts thereof.

Examples of the compound having a carboxyl group include polyacrylic acid, acetic acid, glycolic acid, ascorbic acid, succinic acid, glutaric acid, fumaric acid, citric acid, lactic acid, sulfonic acid, orthophosphoric acid, pyrrolidonecarboxylic acid, pyronecarboxylic acid, pyrrolecarboxylic acid, furancarboxylic acid, pyridinecarboxylic acid, coumalic acid, thiophenecarboxylic acid, nicotinic acid, and derivatives thereof, and salts thereof.

The reaction liquid of the present invention contains a solvent in addition to the specific organic acid, and may further contain an aqueous solvent (e.g., water).
From the viewpoint of preventing damages to the recording medium, the content of a specific organic acid in the reaction liquid is preferably from 15 to 30% by mass, more preferably from 15 to 25% by mass, with respect to the total mass of the reaction liquid.

### (Solvent)

The reaction liquid of the present invention contains at least one solvent of which a 10% by mass aqueous solution has a surface tension (at 25°C) of not less than 40 mN/m (hereinafter, also referred to as "specific solvent"). Inclusion of the specific solvent in the reaction liquid is effective in suppressing damages to the recording medium, by synergistically working together with the specific organic acid.

The specific solvent is not especially restricted as long as the surface tension of the solvent is in the above-described range. From the viewpoint of minimizing paper damage by acid by minimizing the penetration of the solvent and acid into the paper, the surface tension of the solvent is preferably from 40 to 65 mN/m, more preferably from 42 to 62 mN/m, especially preferably from 45 to 60 mN/m.
The value of the surface tension of the solvent of the present invention is determined by the Wilhelmy method at 25°C using a platinum plate. The measurement is performed using a FASE AUTOMATIC SURFACE TENSIONMETER CBVP-Z produced by Kyowa Interface Science Co., Ltd..

In the following, specific examples of the specific solvent are shown, but are not limited thereto. The value in each parenthesis represents surface tension(mN/m).
GP-250: polyoxypropylene glyceryl ether (49.9)
DPG: dipropylene glycol (53.9)
TEGmME: triethylene glycol monomethyl ether (59.6)
TPGmME: tripropylene glycol monomethyl ether (45.9)

The specific solvent may be used singly, or in combination of two or more thereof.

From the viewpoint of suppressing precipitation of the organic acid while drying, the content of the specific solvent is preferably 1 to 30% by mass, more preferably from 3 to 20% by mass, and especially preferably from 5 to 15% by mass, with respect to the total mass of the reaction liquid.

### (Surfactant)

In another preferable embodiment of the present invention, the reaction liquid of the present invention contains at least one anionic or nonionic surfactant.
The surface tension of the reaction liquid can be adjusted to be within a desired range by incorporating the surfactant.
Further, one or more other surface-tension controllers (e.g., betaine surfactant) may be used as long as the effects of the present invention are not impaired.

In view of satisfactorily jetting the reaction liquid by the inkjet method, the surfactant is preferably contained in such an amount that the surface tension of the reaction liquid can be adjusted to a value within the range of from 20 to 60 mN/m. The content of the surfactant is more preferably an amount capable of adjusting the surface tension to a value within the range of from 20 to 45 mN/m, and still more preferably an amount capable of adjusting the surface tension to a value within the range of from 25 to 40 mN/m.
The surface tension of the reaction liquid is measured by a plate method under the condition of 25°C using an Automatic Surface Tensiometer: CBVP-Z (manufactured by Kyowa Interface Science Co. Ltd.).

Specific examples of anionic surfactants include hydrocarbon surfactants such as fatty acid salts, alkyl sulfates, alkyl benzene sulfonates, alkyl naphthalene sulfonates, dialkyl sulfosuccinates, alkyl phosphates, formalin condensates of naphthalene sulfonates, and polyoxyethylene alkyl sulfates.
Specific examples of nonionic surfactants include polyoxyethylene alkyl ethers, polyoxyethylene alkyl allyl ethers, polyoxyethylene fatty acid esters, sorbitan fatty acid esters, polyoxyethylene sorbitan fatty acid esters, polyoxyethylene alkylamines, glycerin fatty acid esters, and oxyethylene-oxypropylene block copolymers. Further, SURFYNOL series (Air Products and Chemicals, Inc.), which is an acetylene polyoxyethylene oxide surfactant, may also be used preferably.

### (Water)

The reaction liquid of the present invention preferably contains water. The content of water in the reaction liquid is not especially restricted. In the present invention, the content of water in the reaction liquid is preferably from 40 to 90% by mass, more preferably from 50 to 85% by mass, and still more preferably from 60 to 80% by mass, with respect to the mass of the reaction liquid.

Further, the reaction liquid may contain a polyvalent metal salt or a polyallylamine as a reaction agent other than those described above, with a view to improving high speed coagulation property.
Examples of the polyvalent metal salt include a salt of any of the following: an alkaline earth metal, which belongs to Group 2 of the Periodic Table, such as magnesium or calcium; a transition metal belonging to Group 3 of the Periodic Table, such as lanthanum; a metal belonging to Group 13 of the Periodic Table, such as aluminum; and a lanthanide, such as neodymium, and examples of the polyallylamine include polyallylamine and polyallylamine derivatives. The salt of such a metal is preferably a carboxylic acid salt (such as a formate, acetate, or benzoate), a nitrate, a chloride, or a thiocyanate. In particular, the following salts are preferable: a calcium or magnesium salt of a carboxylic acid (such as formic acid, acetic acid, or benzoic acid); a calcium or magnesium salt of nitric acid; calcium chloride; magnesium chloride; and a calcium or magnesium salt of thiocyanic acid.

The content of the metal salt in the reaction liquid is preferably in a range of 1 to 10% by mass, more preferably 1.5 to 7% by mass, and still more preferably 2 to 6% by mass, with respect to the mass of the reaction liquid.

From the viewpoint of the coagulation speed of the ink composition, the pH (at 25°C) of the treatment liquid is preferably 3.5 or less, and more preferably in a range of from 0.5 to 2.5.
The value of pH of the reaction liquid is measured at 25°C using a pH meter WM-50EG manufactured by DKK-TOA CORPRATION.

From the viewpoint of the coagulation speed of the ink composition, the viscosity of the reaction liquid is preferably in a range of from 1 to 30mPa·s, more preferably from 1 to 20mPa·s, especially preferably from 2 to 15mPa·s and particularly preferably from 2 to 10mPa·s. The viscosity is measured using a VISCOMETER TV-22 (manufactured by TOKI SANGYO CO. LTD) under the condition of 20°C.
From the viewpoint of the coagulation speed of the ink composition, the surface tension of the reaction liquid at 25°C is preferably from 40 to 60 mN/m, more preferably from 42 to 58 mN/m, and still more preferably from 45 to 55 mN/m. The surface tension of the reaction liquid is measured using an Automatic Surface Tensiometer: CBVP-Z (manufactured by Kyowa Interface Science Co., Ltd.) under the condition of 25°C.

### Ink Composition

### (Pigment)

The ink composition of the present invention contains at least one pigment. When the ink composition contains a pigment, which is a water-insoluble colorant, the ink receiving properties are improved, and a visible image having superior color density can be recorded.
The water-insoluble colorant refers to a colorant that is almost completely insoluble or hardly soluble in water, and specifically refers to such a colorant that the amount of the colorant soluble in water at 25°C is not more than 0.5 mass% of the water.

In the present invention, the water-insoluble colorant contained in the ink composition may be a water-insoluble pigment itself or a water-insoluble pigment that has been surface-treated with a dispersant.

The type of the pigment is not particularly limited, and known organic pigments and known inorganic pigments may be used. Examples of pigments include polycyclic pigments such as an azo lake, an azo pigment, a phthalocyanine pigment, a perylene pigment, a perynone pigment, an anthraquinone pigment, a quinacridone pigment, a dioxadine pigment, a diketopyrrolopyrrole pigment, a thioindigo pigment, an isoindolinone pigment and a quinophthalone pigment; dye lakes such as basic dye lakes and acidic dye lakes; organic pigments such as a nitro pigment, a nitroso pigment, aniline black and a daylight fluorescent pigment; and inorganic pigments such as titanium oxide, iron oxide and carbon black. Pigments that can be dispersed in an aqueous phase may be used even if they are not described in the Color Index. Further examples of usable pigments include: pigments obtained by subjecting the above-described pigments to surface treatment with a surfactant, a polymer dispersant or the like; and grafted carbon.
Among these pigments, an azo pigment, a phthalocyanine pigment, an anthraquinone pigment, a quinacridone pigment and a carbon black pigment are preferable.

Specific examples of organic pigments that may be used in the invention are described below.
Examples of organic pigments for orange or yellow include C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 128, C.I. Pigment Yellow 138, C.I. Pigment Yellow 151, C.I. Pigment Yellow 155, C.I. Pigment Yellow 180 and C.I. Pigment Yellow 185.

Examples of organic pigments for magenta or red include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 222 and C.I. Pigment Violet 19.

Examples of organic pigments for green or cyan include C.I. Pigment Blue 15, C.I. Pigment Blue 15:2, C.I. Pigment Blue 15:3, C.I. Pigment Blue 15:4, C.I. Pigment Blue 16, C.I. Pigment Blue 60, C.I. Pigment Green 7, and aluminum phthalocyanine pigments crosslinked with siloxane such as those described in U.S. Patent No. 4,311,775.

Examples of organic pigments for black include C.I. Pigment Black 1, C.I. Pigment Black 6 and C.I. Pigment Black 7.

### (Dispersant)

When a pigment is contained as a colorant, the pigment is preferably dispersed in an aqueous solvent by a dispersant. The dispersant may be a polymer dispersant or a low-molecular-weight surfactant-type dispersant. The polymer dispersant may be either a water-soluble dispersant or a water-insoluble dispersant.

With the low-molecular-weight surfactant-type dispersant (also referred to as "low-molecular-weight dispersant" in the following), an organic pigment can be stably dispersed in an aqueous medium, while maintaining the viscosity of the ink at a low level. The low-molecular-weight dispersant is a low-molecular-weight dispersant having a molecular weight of 2,000 or less. The molecular weight of the low-molecular-weight dispersant is preferably from 100 to 2,000, and more preferably from 200 to 2,000.

The low-molecular-weight dispersant has a structure containing a hydrophilic group and a hydrophobic group. The number of the hydrophilic group and the number of the hydrophobic group in one molecule are each independently one or more, and the low-molecular-weight dispersant may have plural kinds of hydrophilic group and/or plural kinds of hydrophobic group. The low-molecular-weight dispersant optionally has a linking group for linking the hydrophilic group and the hydrophobic group.

Examples of the hydrophilic group include an anionic group, a cationic group, a nonionic group, and a betaine group in which the above groups are combined.
The anionic group is not particularly limited so long as the group has a negative charge. The anionic group is preferably a phosphoric acid group, a phosphonic acid group, a phosphinic acid group, a sulfuric acid group, a sulfonic acid group, a sulfinic acid group or a carboxylic acid group, more preferably a phosphoric acid group or a carboxylic acid group, and still more preferably a carboxylic acid group.
The cationic group is not particularly limited so long as the group has a positive charge. The cationic group is preferably an organic cationic substituent, more preferably a cationic group containing a nitrogen or phosphorus atom, and still more preferably a cationic group containing a nitrogen atom. Among those, the cationic group is particularly preferably a pyridinium cation or an ammonium cation.
The nonionic group is not particularly limited so long as the group does not have a negative or a positive charge. Examples of the nonionic group include polyalkylene oxide, polyglycerin and a sugar unit of a certain kind.

In the present invention, the hydrophilic group is preferably an anionic group from the viewpoint of dispersion stability and aggregation properties of a pigment.
When the low-molecular-weight dispersant has an anionic hydrophilic group, its pKa is preferably 3 or more in terms of promoting aggregation reaction upon contacting with an acidic treatment liquid. The pKa of the low-molecular-weight dispersant as used herein is a value experimentally obtained based on a titration curve that is obtained by titrating a 1 mmol/liter solution of the low-molecular-weight dispersant dissolved in a tetrahydrofuran/water solution (THF:water = 3:2, V/V), with an acid or aqueous alkaline solution.
Theoretically, when the pKa of a low-molecular-weight dispersant is 3 or more, 50% or more of anionic groups are in a non-dissociation state when contacted with a treatment liquid having a pH of about 3.5 or less. Therefore, water solubility of the low-molecular-weight dispersant is remarkably decreased, and an aggregation reaction occurs, namely, aggregation reactivity is improved. From this viewpoint, the low-molecular-weight dispersant preferably has a carboxylic group as an anionic group.

On the other hand, the hydrophobic group may have, for example, any of a hydrocarbon structure, a fluorocarbon structure, or a silicone structure, and a hydrocarbon structure is particularly preferable. The hydrophobic group may have a straight-chain structure or a branched structure. The hydrophobic group may have a single-chain structure or a chain structure having two or more chains. When the hydrophobic group has a structure having two or more chains, the structure may have plural kinds of hydrophobic group.
The hydrophobic group is preferably a hydrocarbon group having a carbon number of from 2 to 24, more preferably a hydrocarbon group having a carbon number of from 4 to 24, and further preferably a hydrocarbon group having a carbon number of from 6 to 20.

When the polymer dispersant is a water-soluble dispersant, examples threof include a hydrophilic polymer compound. Examples of natural hydrophilic polymer compounds include plant polymers such as gum arabic, gum tragacanth, guar gum, gum karaya, locust bean gum, arabinogalactan, pectin and quince seed starch, algae polymers such as alginic acid, carrageenan and agar, animal polymers such as gelatin, casein, albumin and collagen, and microbial polymers such as xanthene gum and dextran.

Examples of hydrophilic polymer compounds obtained by chemically modifying natural raw materials include cellulose polymers such as methyl cellulose, ethyl cellulose, hydroxyethyl cellulose, hydroxypropyl cellulose and carboxymethyl cellulose, starch polymers such as sodium starch glycolate (sodium salt of starch glycolate), and sodium starch phosphate (sodium salt of starch phosphate[ester]), and algae polymers such as propylene glycol alginate.

Examples of synthetic hydrophilic polymer compounds include vinyl polymers such as polyvinyl alcohol, polyvinyl pyrrolidone and polyvinyl methyl ether; acrylic resins such as polyacrylamide, polyacrylic acid and alkali metal salts thereof, or water-soluble styrene acrylic resin; water-soluble styrene maleic acid resin; water-soluble vinylnaphthalene acrylic resin; water-soluble vinylnaphthalene maleic acid resins; polyvinyl pyrrolidone; polyvinyl alcohol; alkali metal salts of formalin condensates of β-naphthalene sulfonic acid; polymer compounds having, at a side chain, a salt of a cationic functional group such as a quaternary ammonium group or an amino group.

Among those, a polymer compound containing a carboxyl group is preferable from the viewpoint of dispersion stability and aggregation properties of pigment. Polymer compounds containing a carboxyl group such as the following are particularly preferable:
acrylic resins such as water-soluble styrene acrylic resins; water-soluble styrene maleic acid resins; water-soluble vinylnaphthalene acrylic resins; and water-soluble vinylnaphthalene maleic acid resins.

Among the polymer dispersants, examples of water-insoluble dispersants include polymers each having both hydrophilic and hydrophobic moieties, such as styrene-(meth)acrylic acid copolymers, styrene-(meth)acrylic acid-(meth)acrylic ester copolymers, (meth)acrylic ester-(meth)acrylic acid copolymers, polyethylene glycol (meth)acrylate-(meth)acrylic acid copolymers, and styrene-maleic acid copolymers.

The weight average molecular weight of the polymer dispersant is preferably from 3,000 to 200,000, more preferably from 5,000 to 100,000, further preferably from 5,000 to 80,000, and yet further preferably from 10,000 to 60,000.

The mixing ratio by mass of pigment to dispersant (pigment:dispersant) is preferably in a range of from 1:0.06 to 1:3, more preferably in a range of from 1:0.125 to 1:2, and still more preferably in a range of from 1:0.125 to 1:1.5.

A dye may be used in addition to the pigment, as long as the effects of the present invention are not impaired.
When a dye is used as a colorant, a dye retained on a water-insoluble carrier may be used as a water-insoluble colorant. The dye may be selected from known dyes without particular restrictions, and the dyes described in, for example, JP-A Nos. 2001-115066, 2001-335714, and 2002-249677 may be used suitably in the present invention. The carrier is not particularly limited as long as the carrier is insoluble in water or hardly-soluble in water, and the carrier may be selected from an inorganic material, an organic material, or a composite material thereof. Specifically, the carriers described in, for example, JP-A Nos. 2001-181549 and 2007-169418 may be used suitably in the present invention.
The carrier retaining the dye (water-insoluble colorant) may be used in the form of an aqueous dispersion containing a dispersant. As the dispersant, the above-mentioned dispersants may be used suitably.

In the present invention, the ink composition preferably includes a pigment and a dispersant, more preferably includes an organic pigment and a polymer dispersant, and particularly preferably includes an organic pigment and a polymer dispersant containing carboxyl group, in consideration of the light-fastness, quality, and the like of the image. From the viewpoint of aggregation properties and fixability of an ink, the combination of the pigment and the dispersant is preferably such that a water-insoluble organic pigment is covered with an acrylic polymer. Examples of the acrylic polymer include acrylic resins such as water-soluble styrene acrylic resins; water-soluble styrene maleic acid resins; water-soluble vinylnaphthalene acrylic resins; and water-soluble vinylnaphthalene maleic acid resins.
From the viewpoint of aggregation properties, it is preferable that the acid value of the polymer dispersant is larger than the acid value of the below-mentioned polymer particles (preferably self-dispersing polymer particles).

The average particle diameter of the pigment is preferably from 10 nm to 200 nm, more preferably from 10 nm to 150 nm, and still more preferably from 10 nm to 100 nm. When the average particle diameter is 200 nm or less, color reproducibility is excellent, and jetting properties are excellent when jetting droplets by an inkjet method. When the average particle diameter is 10 nm or more, light-fastness is excellent. The particle size distribution of the pigment is not particularly limited, and may be a broad particle size distribution or a monodispersed particle size distribution. It is also possible to use a mixture of two or more pigments having monodispersed particle size distributions.
The volume average particle diameter and particle size distribution of the polymer particles are obtained by measuring particle diameters by a dynamic light scattering method, using a NANOTRAC particle size distribution measuring instrument UPA-EX150 (tradename, manufactured by NIKKISO Co., Ltd.).

From the viewpoint of image density, the content of pigment in the ink composition is preferably from 1 to 25 % by mass, more preferably from 2 to 20 % by mass, still more preferably from 5 to 20 % by mass, and particularly preferably from 5 to 15 % by mass, with respect to the ink composition.
The pigment may be used singly or in combination of two or more thereof.

### (Polymer Particles)

The ink composition of the present invention may contain at least one kind of polymer particles. The polymer (molecule) which constitutes the polymer particles of the present invention is formed of structural units derived from at least one methacrylic derivative monomer and structural units derived from one or more other monomers, and 65% by mass of the polymer structural units are derived from the at least one methacrylic derivative monomer. In the present invention, it is preferable that at least 80% by mass of the polymer structural units are derived from the at least one methacrylic derivative, from the viewpoint of preventing the deformation of the second color image.

The term "methacrylic derivative" used herein refers to a substance selected from a methacrylic ester, a methacrylamide, or methacrylic acid.
The methacrylic ester is not particularly limited as long as it is an ester of methacrylic acid, and may be an alkyl ester or an aryl ester. Specific examples of the methacrylic ester include alkyl methacrylates such as methyl methacrylate, ethyl methacrylate, isopropyl methacrylate, n-propyl methacrylate, n-butyl methacrylate, isobutyl methacrylate, t-butyl methacrylate, hexyl methacrylate and ethylhexyl methacrylate; alkyl methacrylates containing aromatic rings, such as benzyl methacrylate and phenoxylethyl methacrylate; alkyl methacrylates having hydroxyl groups, such as hydroxymethyl methacrylate, 2-hydroxyethyl methacrylate, 2-hydroxypropyl methacrylate, 4-hydroxybutyl methacrylate, hydroxypentyl methacrylate,
and hydroxyhexyl methacrylate; dialkylaminoalkyl methacrylates, such as dimethylaminoethyl methacrylate; and aryl methacrylates, such as phenyl methacrylate.

The methacrylamide is not particularly limited as long as it is an amide of methacrylic acid, and may be an alkyl amide or an aryl amide. Specific examples of the methacrylamide include N-hydroxy alkyl methacrylamides, such as N-hydroxy methyl methacrylamide, N-hydroxy ethyl methacrylamide, and N-hydroxy butyl methacrylamide; N-alkoxy alkyl methacrylamides, such as N-methoxy methyl methacrylamide, N-ethoxy methyl methacrylamide, N-(n-, iso)butoxy methyl methacrylamide, N-methoxy ethyl methacrylamide, N-ethoxy ethyl methacrylamide, and N-(n-, iso)butoxy ethyl methacrylamide.

In the present invention, from the viewpoint of preventing the deformation of the second color image, the methacrylic derivative is preferably at least one of a methacrylic ester or methacrylic acid, and is more preferably at least one of methyl methacrylate, benzyl methacrylate, phenoxyethyl methacrylate, or methacrylic acid.
In the present invention, the at least one methacrylic derivative monomer used for forming the polymer may include a single methacrylic acid derivative only, or two or more methacrylic acid derivatives in combination.

The one or more other monomers, which is used for forming the other structural units of the polymer of the invention than the structural units derived from methacrylic acid derivatives, are not particularly limited as long as they are monomers that are polymerizable with methacrylic acid derivatives, and examples thereof include acrylic derivatives, vinyl ester derivatives, styrene derivatives, olefins (such as ethylene), and maleic derivatives (such as maleic acid and itaconic acid).

In the present invention, the polymer particles are preferably self-dispersing polymer particles, more preferably self-dispersing polymer particles having a carboxyl group, from the viewpoint of jetting stability and stability (particularly, dispersion stability) of the liquid containing the pigment. The self-dispersing polymer particles are particles of a water-insoluble polymer that does not contain a free emulsifier and that can get into a dispersed state in an aqueous medium even in the absence of other surfactants due to a functional group (particularly, an acidic group or a salt thereof) that the polymer itself has.

The scope of the term, "dispersed state", used herein includes an emulsified state (emulsion) in which a water-insoluble polymer in the liquid state is dispersed in an aqueous medium and a dispersed state (suspension) in which a water-insoluble polymer in the solid state is dispersed in an aqueous medium.
The water-insoluble polymer used in the present invention is preferably a water-insoluble polymer that can get into a dispersed state in which the water-insoluble polymer is dispersed in the solid state, in consideration of the coagulation speed and the fixability when the water-insoluble polymer is contained in an ink composition.

The following procedure can be used to determine whether a water-insoluble polymer is a self-dispersing polymer as mentioned herein: 30 g of a water-insoluble polymer is dissolved in 70 g of an organic solvent (such as methyl ethyl ketone) to form a solution, the solution is mixed with 200 g of water and a neutralizing agent that can neutralize the salt-forming groups of the water-insoluble polymer to a degree of 100% (the neutralizing agent being sodium hydroxide if the salt-forming groups are anionic, or acetic acid if the salt-forming groups are cationic), the mixture is stirred with a stirrer having a stirring blade at a rotation rate of 200 rpm at 25°C for 30 minutes, and the organic solvent is removed from the mixture liquid. If a stable dispersion state of the water-insoluble polymer in the mixture liquid is confirmed by visual observation for at least one week at 25°C after the removal of the organic solvent, the water-insoluble polymer is considered to be a self-dispersing polymer.

The term "water-insoluble polymer" used herein refers to a polymer that shows a solubility of 10 g or less when the polymer is dried at 105°C for 2 hours and then dissolved in 100 g of water at 25°C. The solubility is preferably 5 g or less, and more preferably 1 g or less. The solubility mentioned above is a value measured after the polymer is 100% neutralized with either sodium hydroxide or acetic acid depending on the kind of the salt-forming groups of the water-insoluble polymer.

The aqueous medium includes water and, optionally, a hydrophilic organic solvent. In the present invention, the aqueous medium is preferably formed by water and a hydrophilic organic solvent whose amount is 0.2 % by mass or less with respect to the amount of the water, and is more preferably formed by water only.

The self-dispersing polymer particles preferably include a water-insoluble polymer containing a hydrophilic structural unit and a hydrophobic structural unit, from the viewpoint of self-dispersibility. The hydrophobic structural unit is preferably derived from a monomer containing an aromatic group. The expression "... structural unit ... derived from ... (A)" used herein means a component in a polymer which component is formed by the binding of (A) to an adjacent structural unit or units.

The hydrophilic structural unit is not particularly limited as long as it derives from a monomer containing a hydrophilic group. The hydrophilic structural unit may derive from only one type of hydrophilic-group-containing monomer or from two or more types of hydrophilic-group-containing monomer. The hydrophilic group is not particularly limited, and may be a dissociative group or a nonionic hydrophilic group.
In the present invention, the hydrophilic group is preferably a dissociative group, and more preferably an anionic dissociative group, from the viewpoints of enhancing self-dispersibility and providing stability of the formed emulsion or dispersion state. The dissociative group may be, for example, a carboxyl group, a phosphoric acid group, or a sulfonic acid group. In particular, a carboxyl group is preferable as the dissociative group, in consideration of the fixability of an ink composition containing the self-dispersing polymer particles.

The hydrophilic-group-containing monomer in the present invention is preferably a monomer containing a dissociative group, and more preferably a monomer containing a dissociative group and an ethylenic unsaturated bond, in consideration of self-dispersibility and aggregation property.
The dissociative-group-containing monomer may be, for example, an unsaturated carboxylic acid monomer, an unsaturated sulfonic acid monomer, or an unsaturated phosphoric acid monomer

Examples of the unsaturated carboxylic acid monomer include acrylic acid, methacrylic acid, crotonic acid, itaconic acid, maleic acid, fumaric acid, citraconic acid, and 2-methacryloyloxymethylsuccinic acid.
Examples of the unsaturated sulfonic acid monomer include styrenesulfonic acid, 2-acrylamide-2-methylpropane sulfonic acid, 3-sulfopropyl (meth)acrylate, and bis-(3-sulfopropyl) itaconate.
Examples of the unsaturated phosphoric acid monomer include vinyl phosphonic acid, vinyl phosphate, bis(methacryloxyethyl) phosphate, diphenyl-2-acryloyloxyethyl phosphate, diphenyl-2-methacryloyloxyethyl phosphate, and dibutyl-2-acryloyloxyethyl phosphate.
Among the above dissociative-group-containing monomers, unsaturated carboxylic acid monomers are preferable, and acrylic acid and methacrylic acid are more preferable, in consideration of dispersion stability and jetting stability.

The self-dispersing polymer particles in the present invention preferably contains a polymer having a carboxyl group, and more preferably contains a polymer having a carboxylic group and having an acid value (mgKOH/g) of from 25 to 100, from the viewpoints of self-dispersibility and the aggregation speed when the ink composition containing the polymer particles is in contact with the treatment liquid. The acid value is more preferably from 25 to 80, and particularly preferably from 30 to 65, from the viewpoints of self-dispersibility and the aggregation speed when the ink composition containing the polymer particles is in contact with the treatment liquid.
In particular, when the acid value is 25 or more, the stability of the self-dispersibility is favorable, and when the acid value is 100 or less, the aggregation property is improved.

The aromatic-group-containing monomer is not particularly limited as long as the monomer is a compound containing an aromatic group and a polymerizable group. The aromatic group may be a group derived from an aromatic hydrocarbon or from an aromatic heterocycle. In the present invention, the aromatic group is preferably an aromatic group derived from an aromatic hydrocarbon, from the viewpoint of improving the stability of the particle shape in an aqueous medium. The expression "group derived from an aromatic hydrocarbon or from an aromatic heterocycle" used herein means a group formed by removing at least one hydrogen atom from an aromatic hydrocarbon or from an aromatic heterocycle.
The polymerizable group may be a condensation-polymerizable group or an addition-polymerizable group. In the present invention, the polymerizable group is preferably an addition-polymerizable group, and more preferably a group containing an ethylenic unsaturated bond, from the viewpoint of improving the stability of the particle shape in an aqueous medium.

The aromatic-group-containing monomer in the present invention is preferably a monomer having an aromatic group derived from an aromatic hydrocarbon and an ethylenic unsaturated bond. The aromatic-group-containing monomer may be used singly or in combination of two or more thereof.

Examples of the aromatic-group-containing monomer include phenoxyethyl (meth)acrylate, benzyl (meth)acrylate, phenyl (meth)acrylate, and a styrene-based monomer. In particular, from the viewpoint of improving the balance between the hydrophilicity and hydrophobicity of the polymer chain and ink fixability, an aromatic-group-containing (meth)acrylate monomer is preferable, and at least one selected from phenoxyethyl (meth)acrylate, benzyl (meth)acrylate, or phenyl (meth)acrylate is more preferable, and phenoxyethyl (meth)acrylate and benzyl (meth)acrylate are still more preferable.
The term "(meth)acrylate" used herein refers to acrylate or methacrylate.

In the present invention, the self-dispersing polymer is preferably a (meth)acrylic polymer, and more preferably a (meth)acrylic polymer containing a structural unit derived from an aromatic-group-containing (meth)acrylate monomer at a content of from 10 to 95 % by mass. When the content of the aromatic-group-containing (meth)acrylate monomer is from 10 to 95 % by mass, stability of self-emulsification or dispersion state improves, and, further, an increase in the ink viscosity can be suppressed.
In the present invention, the content of the structural unit derived from the aromatic-group-containing (meth)acrylate monomer is more preferably from 15 to 90 % by mass, still more preferably from 15 to 80 % by mass, and particularly preferably from 25 to 70 % by mass, from the viewpoints of improving stability of the self-dispersing state, stabilizing the particle shape in an aqueous medium through hydrophobic interaction between aromatic rings, and reducing the amount of water-soluble components by imparting appropriate hydrophobicity to the particles.

In the present invention, the self-dispersing polymer may include, for example, a structural unit derived from an aromatic-group-containing monomer and a structural unit derived from a dissociative-group-containing monomer. The self-dispersing polymer may further include another structural unit, as necessary.

The monomer for forming another structural unit is not particularly limited as long as the monomer is copolymerizable with the aromatic-group-containing monomer and the dissociative-group-containing monomer. In particular, an alkyl-group-containing monomer is preferable from the viewpoint of flexibility of the polymer skeleton and ease in regulating the glass transition temperature (Tg).
Examples of the alkyl-group-containing monomer include alkyl (meth)acrylates such as methyl (meth)acrylate, ethyl (meth)acrylate, isopropyl (meth)acrylate, n-propyl (meth)acrylate, n-butyl (meth)acrylate, isobutyl (meth)acrylate, t-butyl (meth)acrylate, hexyl (meth)acrylate, and ethylhexyl (meth)acrylate; ethylenic unsaturated monomers each having a hydroxyl group such as hydroxymethyl (meth)acrylate, 2-hydroxyethyl (meth)acrylate, 2-hydroxypropyl (meth)acrylate, 4-hydroxybutyl (meth)acrylate, hydroxypentyl (meth)acrylate, and hydroxyhexyl (meth)acrylate; dialkylaminoalkyl (meth)acrylates such as dimethylaminoethyl (meth)acrylate; alkyl (meth)acrylamides such as N-hydroxyalkyl (meth)acrylamides (such as N-hydroxymethyl (meth)acrylamide, N-hydroxyethyl (meth)acrylamide, and N-hydroxybutyl (meth)acrylamide) and N-alkoxyalkyl (meth)acrylamides (such as N-methoxymethyl (meth)acrylamide, N-ethoxymethyl (meth)acrylamide, N-(n-, iso)butoxymethyl (meth)acrylamide, N-methoxyethyl (meth)acrylamide, N-ethoxyethyl (meth)acrylamide, and N-(n-, iso)butoxyethyl (meth)acrylamide).

The molecular weight of the water-insoluble polymer forming the self-dispersing polymer particles is preferably from 3,000 to 200,000, more preferably from 5,000 to 150,000, and still more preferably from 10,000 to 100,000, in terms of weight average molecular weight. When the weight average molecular weight is 3,000 or more, the amount of water-soluble component can be effectively set to a small amount. When the weight average molecular weight is 200,000 or less, the stability of the self-dispersibility can be improved.

The weight average molecular weight is measured with a gel permeation chromatography (GPC). A GPC instrument, HLC-8220GPC manufactured by Tosoh Corporation, is used; the columns (three in number) to be used are TSKGEL SUPER MULTIPORE HZ-H (manufactured by Tosoh Corporation, 4.6 mmID×15 cm); and THF (tetrahydrofuran) is used as an eluent. Regarding the GPC conditions, the sample concentration is 0.3 % by mass, the flow rate is 0.35 ml/min, the sample injection amount is 10 µl, and the measurement temperature is 40°C. The detection is performed by using a refractive index detector. The calibration curve is determined from the following eight samples: standard samples TSK STANDARD POLYSTYRENE of F-40, F-20, F-4, F-1, A-5000, A-2500, A-1000, and n-propylbenzene, all manufactured by Tosoh Corporation.

When the water-insoluble polymer forming the self-dispersing polymer particles contains a structural unit derived from an aromatic-group-containing (meth)acrylate monomer (preferably a structural unit derived from phenoxyethyl (meth)acrylate and/or a structural unit derived from benzyl (meth)acrylate), the copolymerization ratio of the structural unit derived from an aromatic-group-containing (meth)acrylate monomer is preferably from 15 to 80 % by mass with respect to the total mass of the self-dispersing polymer particles, from the viewpoint of regulating the hydrophilicity/hydrophobicity of the polymer.
From the viewpoint of regulating the hydrophilicity/hydrophobicity of the polymer, the water-insoluble polymer preferably includes a structural unit derived from an aromatic-group-containing (meth)acrylate monomer at a copolymerization ratio of from 15 to 80 % by mass, a structural unit derived from an anionic-group (preferably a carboxyl group)-containing monomer, and a structural unit derived from an alkyl-group-containing monomer (preferably a structural unit derived from a (meth)acrylic ester of an alkyl), and more preferably includes a structural unit derived from phenoxyethyl (meth)acrylate and/or a structural unit derived from benzyl (meth)acrylate at a total copolymerization ratio of from 15 to 80 % by mass, a structural unit derived from an anionic-group (preferably a carboxyl group)-containing monomer, and a structural unit derived from an alkyl-group-containing monomer (preferably a structural unit derived from (meth)acrylic ester of an alkyl having 1 to 4 carbon atoms); further it is preferable that the acid value of the water-insoluble polymer is from 25 to 100 (mg KOH/g) and the weight average molecular weight of the water-insoluble polymer is from 3,000 to 200,000, and it is more preferable that the acid value is from 25 to 95 (mg KOH/g) and the weight average molecular weight is from 5,000 to 150,000.

Exemplary compounds B-01 to B-07 are shown below, which are examples of the water-insoluble polymer forming the self-dispersing polymer particles. However, the present invention is not limited thereto. The numbers in the parentheses indicate mass ratios of copolymerization components.

B-01: methyl methacrylate/methoxyethyl acrylate/benzyl methacrylate/methacrylic acid (44/15/35/6)
B-02: methyl methacrylate/phenoxyethyl acrylate/benzyl methacrylate/methacrylic acid (45/15/35/5)
B-03: phenoxyethyl acrylate/benzyl methacrylate/isobutyl methacrylate/methacrylic acid (16/35/43/6)
B-04: methyl methacrylate/phenoxyethyl methacrylate/benzyl methacrylate/methacrylic acid (45/23/26/6)
B-05: methyl methacrylate /benzyl acrylate/acrylic acid (70/25/5)
B-06: methyl methacrylate/benzyl acrylate/methacrylic acid (65/30/5)
B-07: methyl methacrylate/benzyl acrylate/methacrylic acid (70/25/5)

The method of producing the water-insoluble polymer forming the self-dispersing polymer particles in the present invention is not particularly limited, and may be a method including performing emulsion polymerization in the presence of a polymerizable surfactant so as to covalently bond the surfactant to the water-insoluble polymer or a method including copolymerizing a monomer mixture containing the hydrophilic-group-containing monomer and the aromatic-group-containing monomer by a known polymerization process such as a solution polymerization method or a bulk polymerization method. Among the above polymerization methods, a solution polymerization is preferable, and a solution polymerization method using an organic solvent is more preferable, in consideration of aggregation speed and jetting stability of an ink composition containing the self-dispersing polymer particles.

From the viewpoint of aggregation speed, the self-dispersing polymer particles in the present invention preferably includes a polymer synthesized in an organic solvent, wherein the polymer has anionic groups (preferably carboxyl groups), all or some of the anionic groups (e.g., carboxyl groups) of the polymer are neutralized (to give an acid value of preferably from 20 to 100), and the polymer is prepared in the form of a polymer dispersion in which water constitutes the continuous phase. In other words, the production of the self-dispersing polymer particles in the present invention preferably includes a step of synthesizing a polymer in an organic solvent and a dispersing step of forming an aqueous dispersion in which at least some of the anionic groups (e.g., carboxyl groups) of the polymer are neutralized.

The dispersion step preferably includes the following substeps (1) and (2):
Substep (1): a step of stirring a mixture containing a polymer (water-insoluble polymer), an organic solvent, a neutralizing agent, and an aqueous medium
Substep (2): a step of removing the organic solvent from the mixture

The substep (1) is preferably a process in which the polymer (water-insoluble polymer) is dissolved in the organic solvent, and then the neutralizing agent and the aqueous medium are gradually added to the polymer solution and mixed, by stirring, with the polymer solution to form a dispersion. When the neutralizing agent and the aqueous medium are added to the water-insoluble polymer solution in which the water-insoluble polymer is dissolved in the organic solvent as in the above process, self-dispersing polymer particles whose diameter is highly stable during storage can be obtained without requiring a strong shearing force.
The method of stirring the mixture is not particularly limited, and may be a method using a generally-used mixing and stirring apparatus and/or, if necessary, a disperser such as an ultrasonic disperser or a high-pressure homogenizer.

Preferable examples of the organic solvent described above include an alcohol solvent, a ketone solvent, and an ether solvent.
Examples of the alcohol solvent include isopropyl alcohol, n-butanol, t-butanol, and ethanol. Examples of the ketone solvent include acetone, methyl ethyl ketone, diethyl ketone, and methyl isobutyl ketone. Examples of the ether solvent include dibutyl ether and dioxane. Among the above solvents, ketone solvents such as methyl ethyl ketone and alcohol solvents such as isopropyl alcohol are preferable. It is also preferable to use isopropyl alcohol and methyl ethyl ketone together for the purpose of making milder the polarity change at the time of phase inversion from an oil phase to an aqueous phase; using the solvents together makes it possible to obtain self-dispersing polymer particles having a very small particle diameter that are free from aggregation precipitation or adhesion between the particles and that have high dispersion stability.

The neutralizing agent is used to neutralize all or some of the dissociative groups of the polymer so as to allow the self-dispersing polymer particles to get into a stable emulsion or dispersion state in water. When the self-dispersing polymer in the present invention has an anionic dissociative group (e.g., a carboxyl group) as a dissociative group, the neutralizing agent to be used may be a basic compound such as an organic amine compound, ammonia, or an alkali metal hydroxide. Examples of the organic amine compound include monomethylamine, dimethylamine, trimethylamine, monoethylamine, diethylamine, triethylamine, monopropylamine, dipropylamine, monoethanolamine, diethanolamine, triethanolamine, N,N-dimethyl-ethanolamine, N,N-diethyl-ethanolamine, 2-dimethylamino-2-methyl-1-propanol, 2-amino-2-methyl-1-propanol, N-methyldiethanolamine, N-ethyldiethanolamine, monoisopropanolamine, diisopropanolamine, and triisopropanolamine. Examples of the alkali metal hydroxide include lithium hydroxide, sodium hydroxide, and potassium hydroxide. Among them, sodium hydroxide, potassium hydroxide, triethylamine, and triethanolamine are preferable from the viewpoint of dispersion stability of the self-dispersing polymer particles of the present invention in water.

The amount of the basic compound to be used is preferably from 5 to 120 mol%, more preferably from 10 to 110 mol%, and still more preferably from 15 to 100 mol%, with respect to 100 mol% of the dissociative group. When the amount of the basic compound is 5 mol% or more, an effect of stabilizing the dispersion of the particles in water can be obtained. When the amount of the basic compound is 120 mol% or less, an effect of decreasing the amount of the water-soluble component can be obtained and an increase in the ink viscosity can be suppressed.

In the substep (2), the organic solvent is removed from the dispersion obtained in the substep (1) using a common method such as distillation under reduced pressure, whereby phase inversion into an aqueous system occurs and an aqueous dispersion of the self-dispersing polymer particles is obtained. The organic solvent has substantially been removed from the obtained aqueous dispersion, and the amount of the remaining organic solvent is preferably 0.2 % by mass or less, and more preferably 0.1 % by mass or less.

The average particle diameter of the polymer particles (particularly, self-dispersing polymer particles) is preferably in the range of from 10 nm to 400 nm, more preferably in the range of from 10 nm to 200 nm, still more preferably from 10 nm to 100 nm, particularly preferably from 10 nm to 50 nm, in terms of volume average particle diameter. When the volume average particle diameter is 10 nm or more, the suitability for production is improved. When the volume average particle diameter is 400 nm or less, storage stability is improved.
The particle size distribution of the polymer particles is not particularly limited, and may be a broad particle size distribution or a mono-dispersed particle size distribution. It is possible to use a mixture of two or more types of water-insoluble particles.
The volume average particle diameter and particle size distribution of the polymer particles is obtained by measuring the diameters of the particles by a dynamic light scattering method using Nanotrac particle size distribution measuring instrument UPA-EX150 manufactured by Nikkiso Co., Ltd.

The content of the polymer particles (particularly, self-dispersing polymer particles) in the ink composition is preferably from 1 to 30 % by mass, and more preferably from 5 to 15 % by mass, with respect to the mass of the ink composition, from the viewpoint of image gloss and the like.
It is possible to use one type of polymer particles (particularly, self-dispersing polymer particles) or a mixture of two or more types of polymer particles (particularly, self-dispersing polymer particles).

In the ink composition, the content ratio of pigment to polymer particles (preferably, self-dispersing polymer particles) (pigment/polymer particles) is preferably in the range of from 1/0.5 to 1/10, and more preferably in the range of from 1/1 to 1/4, from the viewpoint of, for example, rubbing resistance of an image.

### (Hydrophilic Organic Solvent)

The ink composition of the present invention preferably contains water as a solvent. Preferably, the ink composition further contains at least one hydrophilic organic solvent. When the ink composition contains a hydrophilic organic solvent, prevention of drying and enhancement of penetration can be achieved. Use of a hydrophilic organic solvent as an anti-drying agent can effectively prevent clogging of a nozzle which may otherwise occur due to drying of ink at an ink jetting port when an ink composition is jetted by an inkjet method to record an image.

For prevention of drying, a hydrophilic organic solvent having vapor pressure lower than that of water is preferable. Specific examples of the hydrophilic organic solvent for prevention of drying include polyhydric alcohols such as ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerin and trimethylolpropane; lower alkyl ethers of a polyhydric alcohol, such as ethylene glycol monomethyl (or ethyl) ether, diethylene glycol monomethyl (or ethyl) ether and triethylene glycol monoethyl (or butyl) ether; heterocycles such as 2-pyrrolidone, N-methyl-2-pyrrolidone, 1,3-dimethyl-2-imidazolidinone and N-ethylmorpholine; sulfur-containing compounds such as sulfolane, dimethylsufoxide and 3-sulfolene; polyfunctional compounds such as diacetone alcohol and diethanolamine; and urea derivatives.
Among them, polyhydric alcohols such as glycerin and diethylene glycol are preferable. The hydrophilic organic solvent may be used alone or in combination of two or more thereof. Those hydrophilic organic solvent is preferably contained in an amount of from 10 to 50% by mass with respect to the ink composition.

Further, in order to enhance penetration, a hydrophilic organic solvent is suitably used from the viewpoint of improving penetration of an ink composition into a recording medium. Specific examples of a suitable hydrophilic organic solvent for enhancing penetration include alcohols, such as ethanol, isopropanol, butanol, di(or tri)ethylene glycol monobutyl ether, and 1,2-hexanediol; sodium lauryl sulfate; sodium oleate; and nonionic surfactants. Favorable effect is obtained when the ink composition contains such a hydrophilic organic solvent at a content of from 5 to 30% by mass. The hydrophilic organic solvent is preferably used in an amount at which bleeding of printed characters and images or print through does not occur.

Other than the above purposes, the hydrophilic organic solvent may be used to adjust viscosity. Specific examples of hydrophilic organic solvents that may be used to adjust viscosity include alcohols (for example, methanol, ethanol, propanol, isopropanol, butanol, isobutanol, sec-butanol, t-butanol, pentanol, hexanol, cyclohexanol and benzyl alcohol), polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol and thiodiglycol), glycol derivatives (for example, ethylene glycol monomethyl ether, ethylene glycol monoethyl ether, ethylene glycol monobutyl ether, diethylene glycol monomethyl ether, diethylene glycol monobutyl ether, propylene glycol monomethyl ether, propylene glycol monobutyl ether, dipropylene glycol monomethyl ether, triethylene glycol monomethyl ether, ethylene glycol diacetate, ethylene glycol monomethyl ether acetate, triethylene glycol monomethyl ether, triethylene glycol monoethyl ether and ethylene glycol monophenyl ether), amines (for example, ethanolamine, diethanolamine, triethanolamine, N-methyl diethanolamine, N-ethyl diethanolamine, morpholine, N-ethylmorpholine, ethylene diamine, diethylene triamine, triethylene tetramine, polyethylene imine and tetramethylpropylene diamine), and other polar solvents (for example, formaldehyde, N,N-dimethylformamide, N,N-dimethylacetamide, dimethylsulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile and acetone).
The hydrophilic organic solvent may be used alone or in combination of two or more thereof.

### (Surfactant)

The ink composition of the present invention preferably contains at least one surfactant. The surfactant may be used as a surface-tension controller. Examples of the surface-tension controller include nonionic surfactants, cationic surfactants, anionic surfactants, and betaine surfactants.

The ink composition preferably contains surfactant in such an amount that the surface tension of the ink composition is adjusted to be from 20 to 60 mN/m, so as to allow the ink composition to be favorably jetted by an inkjet method. In particular, the content of the surfactant is preferably such an amount that the surface tension is adjusted to be from 20 to 45 mN/m, more preferably such an amount that the surface tension is adjusted to be from 25 to 40 mN/m.
The surface tension of the ink composition is measured by a plate method under the condition of 25°C using an Automatic Surface Tensiometer: CBVP-Z (manufactured by Kyowa Interface Science Co. Ltd.).

Examples of the surfactant include, as hydrocarbon surfactants, anionic surfactants such as fatty acid salts, alkyl sulfates, alkyl benzene sulfonates, alkyl naphthalene sulfonates, dialkyl sulfosuccinates, alkyl phosphates, formalin condensates of naphthalene sulfonates and polyoxyethylene alkyl sulfates; and nonionic surfactants such as polyoxyethylene alkyl ethers, polyoxyethylene alkyl allyl ethers, polyoxyethylene fatty acid esters, sorbitan fatty acid esters, polyoxyethylene sorbitan fatty acid esters, polyoxyethylene alkyl amines, glycerin fatty acid esters, and oxyethylene-oxypropylene block copolymers. Further, acetylene-type polyoxyethyleneoxide surfactants, such as SURFYNOL series (trade name, manufactured by Air Products & Chemicals, Inc.), and amine oxide-type amphoteric surfactants such as N,N-dimethyl-N-alkylamine oxide are also preferable.

Moreover, compounds described as surfactants in JP-A No. 59-157636, pp. 37 to 38 and Research Disclosure No. 308119 (1989) are also applicable.
The anti-abrasion properties can be improved by using fluorine (fluoroalkyl) surfactants, silicone surfactants or the like, such as those described in JP-A Nos. 2003-322926, 2004-325707 and 2004-309806.

The aforementioned surface-tension controller may also be used as an anti-foam agent, and fluorine compounds, silicone compounds, chelate compounds such as EDTA are applicable.

### (Water)

The ink composition of the present invention preferably contains water. The content of water in the ink composition is not limited. The content of water in the ink composition of the present invention is preferably from 10 to 99 % by mass, more preferably from 30 to 80 % by mass, still more preferably from 50 to 70 % by mass, with respect to the ink composition.

### (Other additives)

The ink composition used in the present invention may further include other additives than the aforementioned components, such as known additives including an anti-fading agent, an emulsion stabilizer, a penetration enhancing agent, a UV absorber, an antiseptic agent, an antimildew agent, a pH adjuster, an anti-foam agent, a viscosity adjuster, a dispersant, a dispersion stabilizer, an antirust agent and a chelating agent. These additives may be added directly to the ink composition after the preparation of the ink composition. Alternatively, these additives may be added during the preparation of the ink composition.

The incorporation of the UV absorber improves the storability of an image, and examples of the UV absorber include: benzotriazole compounds such as those described in JP-A Nos. 58-185677, 61-190537, 2-782, 5-197075 and 9-34057; benzophenone compounds such as those described in JP-A Nos. 46-2784, and 5-194483 and US Patent No. 3,214,463; cinnamic compounds such as those described in Japanese Patent Publication Nos. 48-30492 and 56-21141 and JP-A No. 10-88106; triazine compounds such as those described in JP-A Nos. 4-298503, 8-53427, 8-239368, 10-182621 and 8-501291; compounds described in Research Disclosure No. 24239; and so-called fluorescent brighteners that emit fluorescent light upon absorption of UV rays, such as stilbene compounds and benzoxazole compounds.

Incorporation of anti-fading agent improves the storability of an image, and examples thereof include an organic anti-fading agent and a metal complex anti-fading agent. Examples of the organic anti-fading agent include hydroquinones, alkoxyphenols, dialkoxyphenols, phenols, anilines, amines, indanes, chromanes, alkoxyanilines and heterocyclic compounds. Examples of the metal complex anti-fading agent include nickel complexes and zinc complexes. More specifically, examples of usable anti-fading agents include those described in the patents cited in Research Disclosure No. 17643, Section VII, Items I to J; Research Disclosure No. 15162; Research Disclosure No. 18716, page 650, left column; Research Disclosure No. 36544, page 527; Research Disclosure No. 307105, page 872; and compounds within the scope of the chemical formulae and examples of representative compounds described in pages 127 to 137 of JP-A No. 62-215272.

Examples of the anti-mildew agents include sodium dehydroacetate, sodium benzoate, sodium pyridinethion-1-oxide, ethyl p-hydroxybenzoate, 1,2-benzoisothiazolin-3-one, and salts thereof. The content of the anti-mildew agent in the ink composition is preferably from 0.02 to 1.00 mass%.

. Examples of the pH adjuster include a neutralizer such as an organic base or an inorganic alkali. The pH adjuster is preferably added such that the pH of the ink composition becomes a value of from 6 to 10, more preferably from 7 to 10, with a view to improving the storability of the ink composition.

The viscosity of the ink composition of the present invention is preferably in the range of from 1 to 30 mPa·s, more preferably from 1 to 20 mPa·s, still more preferably from 2 to 15 mPa·s, especially preferably from 2 to 10 mPa·s, from the viewpoint of improving the jetting stability when jetted by an inkjet method and the coagulation speed when contacted with the treatment liquid of the present invention.
The viscosity of the ink composition is measured using a VISCOMETER TV-22 (manufactured by TOKI SANGYO CO.LTD) at 20°C

### <Inkjet Recording Method>

The inkjet recording method using the ink set for inkjet recording of the present invention is not especially limited as long as the ink set for inkjet recording is used. A known recording method may be used to form an image on a recording medium.
The inkjet recording method preferably includes at least (1) a treatment-liquid applying step in which the above-described treatment liquid is applied onto the recording medium wherein the treatment-liquid is capable of causing formation of an aggregate when the treatment liquid is brought into contact with the ink composition; and (2) an ink applying step in which the above-described ink composition is applied onto the recording medium by an inkjet system. The method may include other steps as required.

The ink composition and the treatment liquid in the inkjet recording method are as described above.

In the inkjet recording method, suppose that the recording system forms an image by allowing the ink composition containing a pigment to react with the treatment liquid that can cause formation of an aggregate through interaction with the ink composition. In the recording system, inclusion of polymer particles in the ink composition suppresses migration of the colorant when plural kinds of ink composition are contacted with or overlapped with each other on the same recording medium, thereby improving the color density and hue of the recorded image.

In the following, the respective steps of the inkjet recording method of the present invention are described.

### -Ink Applying Step-

In the ink applying step, the ink composition is applied onto a recording medium by an inkjet method. In this step, the ink composition can be applied selectively onto the recording medium, so that a desired visible image can be formed. Details of the ink composition are as described above.

Specifically, the recording of an image using an inkjet method may be performed by jetting an ink composition and a reaction liquid onto a desired recording medium by application of energy, and the recording medium is, for example, a plain paper or a resin-coated paper, such as paper exclusively for inkjet recording, a film, paper that can be used both for inkjet recording and electrophotographic recording, cloth, glass, a metal, or ceramic, and examples thereof include those described in JP-A Nos. 8-169172, 8-27693, 2-276670, 7-276789, 9-323475, 62-238783, 10-153989, 10-217473, 10-235995, 10-337947, 10-217597, and 10-337947. An inkjet recording method that is preferred in the present invention is the method described in paragraphs [0093] to [0105] of JP-A No. 2003-306623.

The inkjet method is not particularly limited and may be any known method such as a charge-control method in which ink is jetted by electrostatic attraction force; a drop-on-demand method (pressure-pulse method) in which a pressure of oscillation of a piezo element is utilized; an acoustic inkjet method in which ink is jetted by radiation pressure generated by irradiation of ink with acoustic beams that have been converted from electric signals; and a thermal inkjet method in which ink is jetted by a pressure generated by formation of bubbles caused by heating of ink (BUBBLEJET, registered trademark). An inkjet method described in JP-A No. 54-59936 can be suitably used; in this method, ink is jetted from a nozzle by an acting force generated by a rapid change in volume of the ink caused by application of a thermal energy to the ink.
Further, examples of the inkjet method include a method in which a large number of small-volume droplets of an ink having a low optical density, which is called a photo ink, are jetted; a method in which inks of substantially the same color hue at different densities are used to improve image quality; and a method in which a clear and colorless ink is used.

The inkjet head used in an inkjet method may be either an on-demand type head or a continuous type head. Examples of jetting systems include electromechanical transduction systems (such as a single-cavity system, a double-cavity system, a vendor system, a piston system, a share-mode system and a shared-wall system), electrothermal transduction systems (such as a thermal inkjet system and a BUBBLE-JET (registered trademark) system), electrostatic suction systems (such as an electric-field-control system and a slit-jet system), and discharge systems (such as a spark-jet system), and any of these jetting systems is applicable.
The ink nozzles and the like used for the inkjet recording are not particularly limited, and may be selected as appropriate according to applications.

Regarding the inkjet recording head, there are (i) a shuttle system in which recording is performed while a short serial head having a small length is moved in the width direction of a recording medium in a scanning manner, and (ii) a line system in which a line head having recording devices that are aligned correspondingly to the entire length of one side of a recording medium is used. In the line system, image recording can be performed over the whole of one surface of a recording medium by moving the recording medium in a direction orthogonal to the direction along which the recording devices are aligned, and a conveyance system, such as carriage, which moves the short head in a scanning manner is unnecessary. Since a complicated scan-movement control of the movement of the carriage and the recording medium is unnecessary and only the recording medium is moved, the recording speed can be increased compared to the shuttle system. The inkjet recording method of the present invention can be applied to both of these systems; effects in improving the jetting accuracy and rubbing resistance of an image are larger when the inkjet recording method of the present invention is applied to a line system, in which dummy jetting is not generally performed.

The ink applying step may include a first ink applying step in which the first ink composition is applied to a recording medium and a second ink applying step in which the second ink composition different from the first ink composition is applied to the recording medium within 1 second (more preferably within 0.6 seconds, more preferably within 0.4 seconds) from the application of the first ink composition. At least one of the first ink applying step or the second ink applying step is preferably conducted by the line system.
When the above-described ink composition is used in the ink applying step, occurrence of deformation of a second color image can be more effectively suppressed.

As the first ink composition and the second ink composition, the above-described ink compositions may be employed without limitation. The second ink composition is different from the first ink composition. The first and second ink compositions may differ in components contained or in content ratios of the respective components. In the present invention, the first and second ink compositions preferably differ in at least one of the pigment type or the pigment content ratio, and more preferably differ in the pigment type, from the viewpoint of suppressing the deformation of a second color image.

### Treatment-Liquid Applying Step-

The treatment-liquid applying step is a step in which the above-described treatment liquid is applied to the recording medium, wherein the treatment liquid is capable of causing formation of an aggregate when brought into contact with the ink composition. The treatment-liquid applying step may include forming an image by allowing the ink composition and the treatment liquid to contact each other. In this process, when the treatment liquid contacts, for example, the ink composition containing pigment particles, dispersed particles, including the pigment particles, in the ink composition aggregate whereby the image is fixed on the recording medium.
Details and preferred embodiments of the treatment liquid are as described above.

Application of the treatment liquid can be performed using a known method, such as a coating method, an inkjet method, or an immersion method. The coating method may be a known coating method using a bar coater, an extrusion die coater, an air doctor coater, a blade coater, a rod coater, a knife coater, a squeeze coater, a reverse roll coater, or the like. Details of the inkjet method are as described above.

The treatment-liquid applying step may be performed before or after the ink applying step using the ink composition. In the present invention, it is preferable to perform the ink applying step after the treatment liquid is applied in the treatment-liquid applying step. Specifically, in a preferable embodiment, the treatment liquid for aggregating the pigment in the ink composition is applied on the recording medium prior to applying the ink composition, and the ink composition is applied so as to come into contact with the treatment liquid provided on the recording medium, whereby an image is formed. As a result, inkjet recording can be performed at higher speed, and an image having high density and resolution is obtained even when recording is performed at high speed.

In the inkjet recording method, an intermediate transfer body is used as a recording medium on which an image is recorded first. The inkjet recording method may include an ink applying step in which the ink composition of the present invention is applied onto the intermediate transfer body by the inkjet method; a treatment liquid applying step in which a treatment liquid that is capable of causing formation of aggregate upon contact with the ink composition is applied onto the intermediate transfer body whereby the ink composition and the treatment liquid contact with each other to form an image on the intermediate transfer body; and a transfer step in which the image formed on the intermediate transfer body is transferred onto the desired final recording medium. In the preferable embodiment, it is preferable to perform the ink applying step after the treatment liquid is applied in the treatment-liquid applying step.

In the present invention, it is preferable that the ink applying step is performed after the treatment-liquid applying step and that a heat-drying step of drying the treatment liquid on the recording medium by heating is performed after the application of the treatment liquid onto a recording medium but before the application of the ink composition. By drying the treatment liquid by heating prior to the ink applying step, ink receiving properties, including suppression of bleed, are improved, and a visible image having superior color density and hue can be recorded.

The drying by heating may be performed according to a known heating method using a heater or the like, or an air-blowing method involving air blowing such as a drier, or a method in which these methods are combined. Examples of the heating method include: a method of supplying heat from the side of the recording medium opposite to the surface on which the treatment liquid has been applied, using a heater or the like; a method of blowing a warm or hot air to the surface of the recording medium on which the treatment liquid has been applied; a heating method using an infrared heater; and a combination of two or more of the above methods.

### -Recording Medium-

According to the inkjet recording method of the present invention, an image is recorded on a recording medium.
The recording medium is not particularly limited, and may be a cellulose-based general printing paper, such as high-quality paper, coat paper, or art paper, which is used for general offset printing and the like. When image recording is performed on the cellulose-based general printing paper by a general inkjet method using an aqueous ink, absorption and drying of the ink is relatively slow, colorant migration easily occurs after ink spotting, and image quality tends to lower. In contrast, according to the inkjet recording method of the present invention using the ink set for inkjet recording of the present invention, recording of a high-quality image having excellent color density and hue is achieved while suppressing the migration of the colorant (pigment in the present invention).

The recording medium may be a commercially-available product, and examples thereof include high-quality papers (A) such as PRINCE WOOD FREE (tradename) manufactured by Oji Paper Co., Ltd., SHIRAOI (tradename) manufactured by Nippon Paper Industries Co., Ltd., and *New NPI jo-shitsu* (New NPI high-quality; tradename) manufactured by Nippon Paper Industries Co., Ltd.; very light-weight coated papers such as EVER LIGHT COATED (tradename) manufactured by Oji Paper Co., Ltd. and AURORA S (tradename) manufactured by Nippon Paper Industries Co., Ltd.; lightweight coat papers (A3) such as TOPKOTE (L) (tradename) manufactured by Oji Paper Co., Ltd. and AURORA L (tradename) manufactured by Nippon Paper Industries Co., Ltd.; coat papers (A2, B2) such as TOPKOTE PLUS (tradename) manufactured by Oji Paper Co., Ltd. and AURORA COAT (tradename) manufactured by Nippon Paper Industries Co., Ltd.; and art papers (A1) such as 2/SIDE GOLDEN CASK GLOSS (tradename) manufactured by Oji Paper Co., Ltd. and TOKUBISHI ART (tradename) manufactured by Mitsubishi Paper Mills Ltd. As the recording medium, various inkjet-recording papers exclusively for photos may be used.

From the viewpoint of obtaining a high-quality image having more excellent color density and hue than the conventional one while suppressing the migration of the pigment (colorant), it is preferred that the recording medium has a water absorption coefficient Ka of from 0.05 to 0.5 mL/m²·ms^{1/2}, more preferably from 0.1 to 0.4 mL/m²·ms^{1/2}, and still more preferably from 0.2 to 0.3 mL/m²·ms^{1/2}.

The water absorption coefficient Ka has the same meanings as described in JAPAN TAPPI paper pulp test method No. 51: 2000 (Published by Paper Pulp Technology Association). Specifically, the absorption coefficient Ka is calculated from the difference between the amount of water transferred at a contact time of 100ms and the amount of water transferred at a contact time of 900 ms measured by an AUTOMATIC SCANNING LIQUID ABSORPTOMETER KM500WIN (manufactured by KUMAGAI RIKI KOGYO Co., Ltd.).

In the present invention, the amount of the treatment liquid applied and the amount of the ink composition applied are preferably adjusted as required. For example, the amount of the treatment liquid applied may be varied depending on the recording medium in order to, for example, adjust the physical properties such as the viscoelasticity of the aggregate formed upon mixing the treatment liquid and the ink composition.

An example of a process in which an image is formed by an inkjet recording method of the invention using the ink set of the invention will be described in detail with reference to Fig. 1.
Fig. 1 is a schematic constitutional diagram illustrating the entire configuration of an inkjet recording apparatus.

The inkjet recording apparatus shown in Fig. 1 includes: treatment liquid application unit 12 having treatment liquid ejection head 12S that jets the treatment liquid; treatment liquid drying zone 13 having a heating unit (not shown) that dries the applied treatment liquid; and ink jetting unit 14 that jets various ink compositions; and ink drying zone 15 at which the jetted ink composition is dried, in this order in the conveyance direction of the recording medium (the direction of the arrow shown in the figure). Further, image fixing unit 16 that fixes the image on the recording medium is provided downstream of ink drying zone 15 in the conveyance direction of the recording medium.

The recording medium that has been supplied to the inkjet recording apparatus is conveyed by conveyance rollers from a feed section that feeds the recording medium from a case in which sheets of the recording medium are loaded, to treatment liquid application unit 12, then to treatment liquid drying zone 13, then to ink jetting unit 14, then to ink drying zone 15, and then, optionally, to image fixing unit 16 in which image-fixing is performed as necessary, and then accumulated in an accumulation section. The conveyance of the recording medium may be conducted by a method other than the method using conveyance rollers, and examples thereof include a drum conveyance method using a drum-shaped member, a belt conveyance method, or a stage conveyance method using a stage.

Among the plural conveyance rollers provided in the inkjet recording apparatus, at least one roller may be a drive roller to which the force generated by a motor (not shown) is transmitted. By rotating the drive roller at a constant rate using the motor, the recording medium is conveyed in a predetermined direction, at a predetermined conveyance amount.

Treatment liquid application unit 12 has treatment liquid jetting head 12S, which is connected to a storage tank in which the treatment liquid is stored. Treatment liquid jetting head 12S jets the treatment liquid from jetting nozzles disposed to face the recording surface of the recording medium so that droplets of the treatment liquid can be applied onto the recording medium. The method used in treatment liquid application unit 12 is not limited to a method of jetting from a head in the form of a nozzle, and may be a coating method using a coating roller. According to the coating method, the treatment liquid may be readily applied to almost the entire one surface of the recording medium, including an image portion on which ink droplets are to be spotted by ink jetting unit 14 provided at the downstream side. In order to make uniform the thickness of the treatment liquid applied onto the recording medium, for example, an air-knife may be used, or a method of providing a member having an acute angle to give a gap between the member and the recording medium that corresponds to the predetermined amount of treatment liquid.

Treatment liquid drying zone 13 is positioned downstream of treatment liquid application unit 12 in the conveyance direction of the recording medium. Treatment liquid drying zone 13 may include a known heating method using such as a heater; an air blower such as a drier; or a combination thereof. The heating may be conducted by a method of disposing a heat-generating member, such as a heater, at a side of the recording medium opposite to the surface applied with the treatment liquid wherein, if the recording medium is conveyed automatically, the heat-generating member may be positioned, for example, below the conveyance system that conveys the recording medium placed thereon; or by a method of blowing warm or hot air onto the recording medium applied with the treatment liquid; or by a method of using an infrared heater. Any of these methods may be used singly, or in combination of two or more thereof.

Since the surface temperature of the recording medium may vary depending on the type (material, thickness or the like) of the recording medium and the environmental temperature, it is preferable to dry the treatment liquid while regulating the surface temperature by using a system including a measurement section that measures the surface temperature of the recording medium and a control section that provides the heating control unit with feedback on the temperature measured by the measurement section. The measurement section for measuring the surface temperature of the recording medium is preferably a contact-type or non-contact type thermometer.
The solvent may be removed using, for example, a solvent-removing roller. Alternatively, a method in which excess solvent is removed from the recording medium by an air knife is also applicable.

Ink jetting unit 14 is positioned downstream of treatment liquid drying zone 13 with respect to the conveyance direction of the recording medium. Ink jetting unit 14 includes recording heads (ink jetting heads) 30C, 30M, 30Y and 30K, which are connected to ink reservoirs that store inks of cyan (C), magenta (M) and yellow (Y), and black (K) respectively. Each ink reservoir (not shown) stores an ink composition (treatment liquid) containing a pigment of a corresponding color, a polymer particle, a hydrophilic organic solvent, a surfactant, and water, and supplies the ink to the corresponding head among ink jetting heads 30C, 30M, 30Y, and 30K as necessary, when image recording is performed.

Ink jetting heads 30C, 30M, 30Y and 30K jet inks in a manner corresponding to the image to be formed, through jetting nozzles that are positioned so as to face the recording surface of the recording medium. In this way, inks of the respective colors are applied to the recording surface of the recording medium to form a color image.

Treatment liquid jetting head 12S and ink jetting heads 30C, 30M, 30Y, and 30K are each in the form of full-line head in which a number of jetting ports (nozzles) are aligned along the maximum recording width of the image to be formed on the recording medium. In this form, image recording on a recording medium can be carried out at higher speed compared to serial-type recording in which recording is carried out using a short-length shuttle head that reciprocates in the width direction of the recording medium (in a direction on the plane of the recording medium that is perpendicular to the conveyance direction of the recording medium) in a scanning manner. In the present invention, either of above serial-type recording method or a recording method capable of recording at relatively high speed, such as a single-path system in which an image is formed in one scanning-movement by jetting using a line head while moving the recording medium relative to the line head in the fast scanning direction, may be employed. In the image recording method of the present invention, while keeping good jetting stability, a high-quality image having high reproducibility and excellent rubbing resistance may be obtained even in the single-path system.
In the figure, treatment liquid jetting head 12S and ink jetting heads 30C, 30M, 30Y, and 30K have the same structure.

The application amount of the treatment liquid and the application amount of the ink composition are preferably regulated in accordance with the necessity. For example, the amount of the treatment liquid may be changed according to the type of the recording medium, in order to, for example, adjust the properties such as viscoelasticity of the aggregates formed upon mixing of the treatment liquid and the ink composition.

Ink drying zone 15 is positioned downstream of ink jetting unit 14 in the conveyance direction of the recording medium. Ink drying zone 15 may have a structure similar to that of treatment liquid drying zone 13.

In order to provide a more stable fixability to the recording medium after the image is dried, image fixing unit 16 may be provided as required.
Image fixing unit 16 is positioned further downstream of ink drying zone 15 in the conveyance direction of the recording medium. Image fixing unit 16 may include a pair of rollers - fuser roller 40A and fuser roller 40B - that are in pressure contact with each other. When the recording medium passes between fuser roller 40A and fuser roller 40B, an image formed on the recording medium is pressured and heated, whereby the fixability of the image recorded on the recording medium is improved. Fuser rollers 40A and 40B are preferably a pair of rollers consisting of one pressure roller and one heat roller, but are not limited thereto.

The inkjet recording apparatus may further include a heating unit that is disposed at the conveyance path between the feed section and the accumulation section and that conducts a heat treatment on the recording medium. For example, the temperature of the recording medium can be increased to a desired temperature by providing the heating unit at a desired position, such as upstream of treatment liquid drying zone 13 or between ink jetting unit 14 and ink drying zone 15, whereby drying and fixing is performed effectively.

### EXAMPLES

In the following, the present invention will be described in further details with reference to examples. However, the present invention is not limited to these examples. Moreover, the term "part" and "%" are based on mass, and "degree of polymerization" refers to an "average degree of polymerization" unless otherwise noted.

Weight average molecular weight was measured by gel permeation chromatography (GPC). In GPC, HLC-8020GPC (manufactured by Tosoh Corporation) was used, and 3 pieces of TSKGEL SUPER MULTIPORE HZ-H (manufactured by Tosoh Corporation, 4.6 mm ID × 15 cm) were used as the column, and THF (tetrahydrofuran) was used as an eluent. Regarding the GPC conditions, the sample concentration is 0.3 mass%, the flow rate was 0.35 mL/min, the sample injection amount was 10 µL, and the measurement temperature was 40°C. The detection was performed by using a refractive index detector. The calibration curve was determined from the following eight samples of standard samples TSK STANDARD, POLYSTYRENE of "F-40", "F-20", "F-4", "F-1", "A-5000", "A-2500", "A-1000", and "n-propylbenzene" manufactured by Tosoh Corporation.

### (Synthesis of Polymer Dispersant P-1)

In accordance with the following scheme, a polymer dispersant P-1 was synthesized as shown below.

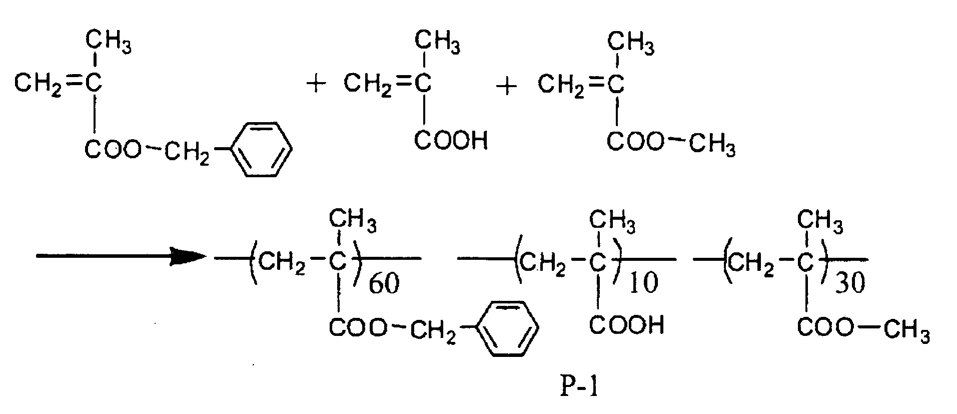

88 g of methyl ethyl ketone was put in a 1000 mL three-necked flask equipped with a stirrer and a cooling tube, and was heated to 72°C in a nitrogen atmosphere, to which a solution of 0.85 g of dimethyl-2,2'-azobisisobutyrate, 60 g of benzyl methacrylate, 10 g of methacrylic acid, and 30 g of methyl methacrylate dissolved in 50 g of methyl ethyl ketone was added dropwise over 3 hr. After completing the dropwise addition and further allowing the mixture to react for 1 hr, a solution in which 0.42 g of dimethyl-2,2'-azobisisobutyrate was dissolved in 2 g of methyl ethyl ketone was added. The resultant mixture liquid was heated to 78°C and maintained at that temperature for 4 hr. The obtained reaction liquid was re-precipitated twice in a great excess of hexane, and a precipitated resin was dried, thereby obtaining 96 g of a polymer dispersant P-1.
The composition of the obtained resin was confirmed by ¹H-NMR and the weight average molecular weight (Mw) determined by GPC was 44,600. Further, its acid value was determined according to the method described in JIS standards (JISK0070:1992, the disclosure of which is incorporated by reference herein), and was found to be 65.2 mgKOH/g.

### (Preparation of Cyan Dispersion Liquid C)

10 parts of Pigment Blue 15:3 (Phthalocyanine blue A220 manufactured by Dainichiseika Color & Chemicals Mfg. Co., Ltd.), 5 parts of the polymer dispersant P-1, 42 parts of methyl ethyl ketone, 5.5 parts of 1N NaOH aqueous solution and 87.2 parts of ion exchanged water were mixed, and the mixture was dispersed by a bead mill using 0.1 mmϕ zirconia beads for 2 to 6 hours.
Methyl ethyl ketone was removed from the resultant dispersion under reduced pressure at 55°C and a portion of water was also removed from the resultant. Then, further, the resultant was centrifuged using High Speed Refrigerated Centrifuge 7550 (manufactured by KUBOTA Corporation) using a 50 mL centrifuge tube at 8000 rpm for 30 minutes to collect the supernatant other than the precipitate. Thereafter, the concentration of the pigment was determined from the absorbance spectrum, and a cyan dispersion liquid (a dispersion of resin-coated pigment particles which are coated with a polymer dispersant) having a pigment concentration of 10.2 % by mass was obtained.

### (Preparation of Magenta Dispersion Liquid M)

A magenta dispersion liquid M was prepared in the same manner as the preparation of the cyan dispersion liquid C except that Pigment Red 122 was used in place of Pigment Blue 15:3 (Phthalocyanine blue-A220 manufactured by Dainichiseika Color & Chemicals Mfg. Co., Ltd.).

### (Preparation of Yellow Dispersion Liquid Y and Black Dispersion Liquid K)

A yellow dispersion liquid Y was prepared in the same manner as the preparation of the cyan dispersion liquid C except that a yellow pigment, Pigment Yellow 74, was used in place of the cyan pigment Pigment Blue 15:3 and the addition amount of the polymer dispersant was changed to 4.0 g in terms of solid amount. The average particle size of the obtained yellow dispersion liquid Y was 82 nm.

A black dispersion liquid K was prepared in the same manner as the preparation of the cyan dispersion liquid C except that a carbon black (NIPEX160-IQ manufactured by Degussa Co.) was used in place of the cyan pigment Pigment Blue 15:3 and the addition amount of the polymer dispersant was changed to 3.0 g in terms of solid amount. The average particle size of the obtained black dispersion liquid K was 130 nm.

### Preparation of Self-dispersing Polymer Particles

### -Synthetic Example 1-

360.0g of methyl ethyl ketone was placed in a 2L three-necked flask equipped with a stirrer, a thermometer, a reflux condenser, and a nitrogen gas introduction tube, and was heated to 75°C. Thereafter, while the temperature inside the flask was maintained at 75°C, a mixture solution of 180.0g of phenoxyethyl acrylate, 162.0g of methyl methacrylate, 18.0g of acrylic acid, 72g of methyl ethyl ketone, and 1.44g of V-601 (trade name, manufactured by Wako Pure Chemical Industries Ltd.) was added dropwise into the flask at a constant rate such that the dropwise addition was completed in 2 hours. After the dropwise addition was completed, a solution of 0.72g of V-601 in 36.0g of methyl ethyl ketone was added into the flask, stirred at 75°C for 2 hours, and a solution of 0.72g of V-601 in 36.0g of isopropanol was further added, and the contents of the flask were stirred at 75°C for 2 hours. Then, the temperature inside the flask was increased to 85°C, and stirring was continued for another 2 hours. The weight average molecular weight (Mw) of the obtained copolymer was found to be 64,000 (calculated as polystyrene-equivalent value according to gel permeation chromatography (GPC), columns used were TSKgel Super HZM-H, TSKgel Super HZ4000, and TSKgel Super HZ200 manufactured by Tosoh Corporation). The acid value of the copolymer was found to be 38.9 mgKOH/g.
Then, 668.3g of the polymerization solution was weighed, and 388.3g of isopropanol and 145.7ml of a 1mol/L NaOH aqueous solution were added to the polymerization solution, and then the temperature inside the reaction vessel was elevated to 80°C. Thereafter, 720.1g of distilled water was added dropwise into the reaction vessel at a rate of 20ml/min so as to form a water dispersion. The contents of the reaction vessel was allowed to stand, under atmospheric pressure, at a reaction vessel inside temperature of 80°C for 2 hours, and then 85°C for 2 hours, and then 90°C for 2 hours. Subsequently, the inside of the reaction vessel was depressurized, and the isopropanol, the methyl ethyl ketone, and the distilled water were removed in a total amount of 913.7g. As a result, a water dispersion (emulsion) of self-dispersing polymer particles B-01 having a solid concentration of 28.0 % by mass was obtained. The number assigned to each structural unit in the structural formula of the exemplified self-dispersible polymer (B-01) shown below indicates a mass ratio. Hereinafter, the same applies to each structural formula.

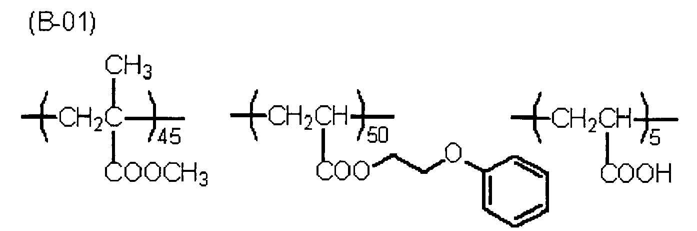

### <Preparation of Ink Compositions>

Ink compositions were prepared by mixing the components to achieve the compositions described in the following table, using the pigment dispersion liquids obtained above and the dispersion of the self-dispersing polymer particles (B-01). The prepared ink compositions were filtered through a PVDF 5µm filter (MILLEX-SV manufactured by Millipore Corporation; diameter: 25 mm) in a plastic disposable syringe to provide final ink compositions.

**Table 1**

| Ink Composition | C1 | M1 | Y1 | K1 |
|---|---|---|---|---|
| Cyan Pigment (Pigment dispersion liquid C was used) | 4 | | | |
| Magenta Pigment (Pigment dispersion liquid M was used) | | 4 | | |
| Yellow Pigment (Pigment dispersion liquid Y was used) | | | 4 | |
| Black Pigment (Pigment dispersion liquid K was used) | | | | 4 |
| Pigment dispersant (Polymer dispersant P-1) | 2 | 2 | 2 | 2 |
| SUNNIX (NEWPOL) GP-250 (Sanyo Chemical Industries, Ltd.) | 10 | 10 | 10 | 10 |
| Tripropylene Glycol Monomethyl Ether | 5 | 5 | 5 | 5 |
| OLFINE E1010 (Nissin Chemical Industry Co., Ltd.) | 1 | 1 | 1 | 1 |
| Self-Dispersing Polymer Particles (Solid amount) | 4 | 4 | 4 | 4 |
| Water | 74 | 74 | 74 | 74 |
| Ink composition physical properties: pH | 8.7 | 8.6 | 8.4 | 8.5 |
| Ink composition physical properties: Surface tension (mN/m) | 34.6 | 35.2 | 35.1 | 34.8 |

The pH and the surface tension in Table 1 were measured as follows.
The pH was measured for each ink composition by using a pH meter WM-50EG manufactured by DKK-TOA CORPRATION. The surface tension was measured by FASE AUTOMATIC SURFACE TENSIONMETER CBVP-Z produced by Kyowa Interface Science Co., Ltd.

### <Preparation of Reaction Liquid>

### (Preparation of Reaction Liquid 1)

Reaction liquid 1 was prepared by mixing the following components.

| | |
|---|---|
| ·Maleic acid | 25.0g |
| ·Anionic surfactant A (10% aqueous solution) | 0.1g |
| ·Diethylene glycol monobutyl ether | 10.0g |
| ·Ion exchanged water | 64.9g |

The pH of the reaction liquid was measured by a pH meter WM-50EG manufactured by DKK-TOA CORPRATION, and was found to be pH 0.53.
The surface tension was measured by the Wilhelmy method at 25°C employing a platinum plate using FASE AUTOMATIC SURFACE TENSIONMETER CBVP-Z produced by Kyowa Interface Science Co., Ltd. The surface tension of Reaction Liquid 1 was 38.5 mN/m. The surface tension of a 10 % by mass aqueous solution of the solvent alone was 34.1 mN/m.
The pKa of the organic acid was measured by a titration method at 25°C. The pKa1 of the above-described organic acid was found to be 1.84.
The structure of the anionic surfactant A which was used in the reaction liquid is shown below:

### Surfactant A:

C₇H₁₅-CH=CH-C₇H₁₄C(O)-N(CH₃)-CH₂CH₂-SO₃Na

### (Preparation of Reaction Liquid 2 to 13)

Reaction liquids 2 to 13 were prepared according to the formulation of the above-described reaction liquid 1 except for changing the kind and amount of acid and solvent. The formulation and the physical property values are shown in the Table 2 (the amount of the surfactant A was changed as required).

### <Image Recording>

On an A4 size recording medium TOKUBISHI ART (manufactured by MITSUBISHI PAPER MILLS LIMITED), an image was recorded under the following image recording conditions by using the reaction liquid shown in Table 2 below and the above-described ink composition.

### (Jetting System)

Four-color single-path image formation was performed under the following conditions by using the cyan pigment ink C1, magenta pigment ink M1, yellow pigment ink Y1 and black ink K1 obtained above as ink compositions.

### (Reaction Liquid Applying Step)

Just before applying the ink composition onto the recording medium, the reaction liquid shown in the Table 1 was applied, at an amount of 1.7 g/m², onto the surface of the recording medium by using a coating bar.
Subsequently, the recording medium to which the reaction liquid was applied was dried under the following conditions.

### -Drying Condition for Reaction Liquid (Blow Dry)-

| | |
|---|---|
| Blow speed | : 15 m/s |
| Temperature | : The recording medium was heated by a contact-type flat heater from the backside of the recording side such that the surface temperature of the recording medium reached 60°C. |
| Blowing area | : 450 mm (Drying time: 0.7 seconds) |

### (Ink Applying Step: Second Color Solid Image Formation)

Under the following conditions, the ink compositions were applied onto the recording medium on which the reaction liquid had been applied

| | |
|---|---|
| Head | : 1,200 dpi/ 20inch-width piezo full-line heads were installed for four colors. |
| Amount of Ejection Droplet Volume | : 2.4 pL |
| Drive Frequency | : 30 kHz (conveyance speed of recording medium: 635 mm/sec) |

A second color image, which was a solid image of the cyan ink, was formed on the solid image of the magenta ink.
Subsequently, the recording medium to which the ink was applied was dried under the following conditions.

### -Drying Condition for Ink (Blow Dry) -

| | |
|---|---|
| Blow speed | : 15 m/s |
| Temperature | : The recording medium was heated by a contact-type flat heater from the backside of the recording side such that the surface temperature of the recording medium reached 60°C. |
| Blowing area | : 640 mm (Drying time: 1 second) |

Subsequently, a heat fixation process was performed under the following conditions.

### -Fixation-

Silicone rubber rollers (hardness: 50°, nip width: 5 mm)
Roller temperature: 90°C
Pressure: 0.8 MPa

### <Evaluation of Ink Set for Inkjet Recording>

The following evaluations were conducted using the ink compositions and reaction liquids obtained above.

### 1. Evaluation of Surface Condition of Portion Coated with Reaction Liquids (Paper Surface Damage)

A portion of the sample at which the inks were not spotted was illuminated from an angle of about 30° and the condition of the surface of the paper (recording medium) was observed by visual inspection with a 50x loupe.

### <Evaluation criteria>

A: The condition of the whole paper surface is nearly the same as that of paper surface that is not coated with the reaction liquid.
B: Extremely small surface swellings are very sparsely observed. However, the extent of the surface swellings is tolerable for practical applications.
C: A small number of small swellings are sparsely observed on the paper surface. The extent of the surface swellings is problematic for practical applications.
D: Many relatively large swellings are observed on the paper surface, and the gloss of the white background portion decreases. The extent of the swellings and the gloss decrease is problematic for practical applications.

### 2. Tape Detachment Evaluation on Image Portion

A piece of SELLOTAPE (Registered Trademark) was adhered to the above-described second color solid image portion and peeled off, and the degree of the removal of ink of the printed image is evaluated. Regarding the evaluation criteria, the degree of removal was evaluated on the scale of 1 to 5 depending on the degree of the removal of the ink such that 1 represents nearly the total removal of the ink and 5 represents no removal.
5: No removal of the ink
4: Very slight coloring of the adhesive surface of the detached tape is observed although discernible removal of the image is not observed (minimum tolerable level for practical applications).
3: White background portion is slightly exposed, and scattered colored portions are observed on the adhesive surface of the detached tape.
2: About a half of the printed image is removed, and the printed image adheres to the adhesive surface of the detached tape.
1: The whole printed image is removed, and the paper surface is totally exposed.

**Table 2**

| Reaction Liquid No. | Acid | | | Solvent | | | Surface Tension of the Reaction Liquid (mN/m) | pH of the Reaction Liquid | Evaluation | | |
|---|---|---|---|---|---|---|---|---|---|---|---|
| | Acid Kind | Added Amount (mass%) | pKal | Solvent Kind | Added Amount (mass%) | *Surface Tension (mN/m) | | | Paper Damage | Tape Detachment | Note |
| 1 | Maleic Acid | 25 | 1.84 | DEGmBE | 10 | 34.1 | 38.5 | 0.53 | D | 3 | Comparative Example |
| 2 | Maleic Acid | 25 | 1.84 | GP-250 | 10 | 49.9 | 45.8 | 0.51 | A | 5 | Present invention |
| 3 | Maleic Acid | 25 | 1.84 | DPG | 10 | 53.9 | 53.2 | 0.56 | A | 5 | Present invention |
| 4 | Maleic Acid | 25 | 1.84 | TEGmME | 10 | 59.6 | 56.4 | 0.53 | A | 5 | Present invention |
| 5 | Maleic Acid | 25 | 1.84 | TEGmBE | 10 | 39 | 39.2 | 0.55 | D | 2 | Comparative Example |
| 6 | Malonic Acid | 22.5 | 2.6 | DEGmBE | 10 | 34.1 | 37.5 | 0.95 | C | 3 | Comparative Example |
| 7 | Malonic Acid | 22.5 | 2.6 | GP-250 | 10 | 49.9 | 45 | 0.92 | A | 5 | Present invention |
| 8 | Malonic Acid | 22.5 | 2.6 | DPG | 10 | 53.9 | 52.6 | 0.93 | A | 5 | Present invention |
| 9 | Malonic Acid | 22.5 | 2.6 | TPGmME | 10 | 45.9 | 57.8 | 0.94 | A | 5 | Present invention |
| 10 | Nitric Acid | 15 | 1.38 | DEGmBE | 10 | 34.1 | 37.8 | 0 | D | 3 | Comparative Example |
| 11 | Oxalic Acid | 12 | 1.04 | DEGmBE | 10 | 34.1 | 35.5 | 0.53 | D | 2 | Comparative Example |
| 12 | DL-Malic Acid | 25 | 3.23 | TPGmME | 10 | 45.9 | 45.2 | 1.01 | A | 5 | Present invention |
| 13 | Glutaric Acid | 25 | 4.13 | GP-250 | 10 | 49.9 | 47.6 | 1.89 | B | 4 | Present invention |
| 14 | Acetic Acid | 26 | 4.57 | DEGmBE | 10 | 34.1 | 35.8 | 1.95 | C | 4 | Comparative Example |

The abbreviations of the solvents which were used in the above Examples are as follows:

| | |
|---|---|
| DEGmBE | : diethylene glycol monobutyl ether |
| GP-250 | : polyoxypropylene glyceryl ether (Sanyo Chemical Industries, Ltd.) |
| DPG | : dipropylene glycol |
| TEGmME | : triethylene glycol monomethyl ether |
| TEGmBE | : triethylene glycol monobutyl ether |
| TPGmME | : tripropylene glycol monomethyl ether |

| | |
|---|---|
| : tripropylene glycol monomethyl ether | |

As is clear from Table 2, use of the ink sets in which the comparative reaction liquids Nos. 1,5,6,10,11 and 14 were used resulted in severe paper damages and inferior tape detachment evaluation results.
On the other hand, use of the ink sets in which the reaction liquid of the present invention were used resulted in no paper damage and favorable tape detachment evaluation results.

The present invention provides an ink set for inkjet recording capable of decreasing defects on the surface of the recording medium and obtaining excellent image that does not easily detach.
Embodiments of the present invention include, but are not limited to, the following.
<1> An ink set for inkjet recording comprising: an ink composition including a pigment; and a reaction liquid including a solvent and an organic acid which has a first acid dissociation constant (at 25°C) of from 1.5 to 4.5, wherein a 10% by mass aqueous solution of the solvent has a surface tension (at 25°C) of not less than 40 mN/m.
<2> The ink set for inkjet recording according to <1>, wherein the first acid dissociation constant (at 25°C) of the organic acid is from 1.8 to 4.0.
<3> The ink set for inkjet recording according to <1> or <2>, wherein the surface tension (at 25°C) of the reaction liquid is from 40 to 60 mN/m.
<4> The ink set for inkjet recording according to any one of <1> to <3>, wherein the concentration of the organic acid in the reaction liquid is from 15 to 30 % by mass.
<5> The ink set for inkjet recording according to any one of <1> to <4>, wherein the reaction liquid includes the solvent at a content of from 1 to 30 % by mass relative to the total mass of the reaction liquid.
<6> The ink set for inkjet recording according to any one of <1> to <5>, wherein the reaction liquid has a pH (at 25°C) of 3.5 or less.
<7> The ink set for inkjet recording according to any one of <1> to <6>, wherein the reaction liquid has a pH (at 25°C) of from 0.5 to 2.5.
<8> The ink set for inkjet recording according to any one of <1> to <7>, wherein the reaction liquid includes an anionic surfactant or a nonionic surfactant.
<9> The ink set for inkjet recording according to any one of <1> to <8>, wherein the organic acid is selected from the group consisting of maleic acid, malonic acid, DL-malic acid and tartaric acid.
<10> The ink set for inkjet recording according to any one of <1> to <9>, wherein the solvent has a surface tension of from 40 to 65 mN/m.
<11> The ink set for inkjet recording according to any one of <1> to <10>, wherein the solvent is selected from the group consisting of polyoxypropylene glyceryl ether, dipropylene glycol, triethylene glycol monomethyl ether and tripropylene glycol monomethyl ether.
<12> The ink set for inkjet recording according to any one of <1> to <11>, wherein the reaction liquid includes water at a content of from 40 to 90 % by mass.
<13> The ink set for inkjet recording according to any one of <1> to <12>, wherein the reaction liquid further includes a polyvalent metal salt or a polyallylamine.
<14> The ink set for inkjet recording according to any one of <1> to <13>, wherein the reaction liquid has a viscosity of from 1 to 30 mPa· s.
<15> The ink set for inkjet recording according to any one of <1> to <14>, wherein the ink composition further includes a polymer particle.

All publications, patent applications, and technical standards mentioned in this specification are herein incorporated by reference to the same extent as if each individual publication, patent application, or technical standard was specifically and individually indicated to be incorporated by reference.

## Claims

1. An ink set for inkjet recording comprising:
an ink composition including a pigment; and
a reaction liquid including a solvent and an organic acid which has a first acid dissociation constant (at 25°C) of from 1.5 to 4.5, wherein
a 10% by mass aqueous solution of the solvent has a surface tension (at 25°C) of not less than 40 mN/m.

2. The ink set for inkjet recording according to claim 1, wherein the first acid dissociation constant (at 25°C) of the organic acid is from 1.8 to 4.0.

3. The ink set for inkjet recording according to claim 1 or 2, wherein the surface tension (at 25°C) of the reaction liquid is from 40 to 60 mN/m.

4. The ink set for inkjet recording according to any one of claims 1 to 3, wherein the concentration of the organic acid in the reaction liquid is from 15 to 30% by mass.

5. The ink set for inkjet recording according to any one of claims 1 to 4, wherein the reaction liquid comprises the solvent at a content of from 1 to 30% by mass relative to the total mass of the reaction liquid.

6. The ink set for inkjet recording according to any one of claims 1 to 5, wherein the reaction liquid has a pH (at 25°C) of 3.5 or less.

7. The ink set for inkjet recording according to any one of claims 1 to 6, wherein the reaction liquid has a pH (at 25°C) of from 0.5 to 2.5.

8. The ink set for inkjet recording according to any one of claims 1 to 7, wherein the reaction liquid comprises an anionic surfactant or a nonionic surfactant.

9. The ink set for inkjet recording according to any one of claims 1 to 8, wherein the organic acid is selected from the group consisting of maleic acid, malonic acid, DL-malic acid and tartaric acid.

10. The ink set for inkjet recording according to any one of claims 1 to 9, wherein the solvent has a surface tension of from 40 to 65 mN/m.

11. The ink set for inkjet recording according to any one of claims 1 to 10, wherein the solvent is selected from the group consisting of polyoxypropylene glyceryl ether, dipropylene glycol, triethylene glycol monomethyl ether and tripropylene glycol monomethyl ether.

12. The ink set for inkjet recording according to any one of claims 1 to 11, wherein the reaction liquid comprises water at a content of from 40 to 90% by mass.

13. The ink set for inkjet recording according to any one of claims 1 to 12, wherein the reaction liquid further comprises a polyvalent metal salt or a polyallylamine.

14. The ink set for inkjet recording according to any one of claims 1 to 13, wherein the reaction liquid has a viscosity of from 1 to 30 mPa·s.

15. The ink set for inkjet recording according to any one of claims 1 to 14, wherein the ink composition further comprises a polymer particle.
